# EUROPEAN PATENT APPLICATION

(11) **EP 4 148 656 A1**
(43) Date of publication of application: **15.03.2023**
(21) Application number: 21812348.7
(22) Date of filing: 20.04.2021
(51) Int. Cl.: G06T 1/20

(54) **MULTIMEDIA PROCESSING CHIP, ELECTRONIC DEVICE, AND DYNAMIC IMAGE PROCESSING METHOD**

(30) Priority: 29.05.2020 CN 202010478366
(71) Applicant: GUANGDONG OPPO MOBILE TELECOMMUNICATIONS CORP., LTD., Dongguan, Guangdong 523860 (CN)
(72) Inventor: WANG, Wendong, Dongguan, Guangdong 523860 (CN)
(74) Representative: Mewburn Ellis LLP
(86) International application number: PCT/CN2021/088513
(87) International publication number: WO 2021/238506

(57) **Abstract**

Implementations of the disclosure provide a multimedia processing chip, an electronic device, and a method for dynamic-image processing. The multimedia processing chip includes an image signal processor (ISP) and a neural network processing unit (NPU). The ISP collects status information of image data. The NPU processes the image data with a neural network algorithm. The multimedia processing chip performs pre-processing on the image data at least by the NPU and transmits the status information and the pre-processed image data to an application processing chip.

## Description

### CROSS-REFERENCE TO RELATED APPLICATION(S)

This application claims priority to Chinese Application Patent No. 202010478366.5, filed May 29, 2020, and entitled "MULTIMEDIA PROCESSING CHIP, ELECTRONIC DEVICE, AND METHOD FOR DYNAMIC-IMAGE PROCESSING", the entire disclosure of which is hereby incorporated by reference.

### TECHNICAL FIELD

This disclosure relates to the field of image processing technology, and in particular to a multimedia processing chip, an electronic device, and a method for dynamic-image processing.

### BACKGROUND

Various multimedia devices (such as digital cameras, smart phones, tablet computers, etc.) that have video shooting and photographing functions generally have image sensors for capturing images, multimedia processing chips for image processing, and application processors (APs). The image sensor can be coupled to the multimedia processing chip through a mobile industry processor interface (MIPI) line, and the multimedia processing chip can be coupled to the AP through the MIPI line.

The image sensor may include a complementary metal-oxide-semiconductor (CMOS) image sensor, a charge coupled device (CCD) image sensor, and the like. The multimedia processing chip generally uses an image signal processor (ISP) to process the image captured by the image sensor. After image processing, the multimedia processing chip obtains a processing result, and transmits the processing result to the AP. However, the multimedia processing chip in the related art has limited image processing capability.

### SUMMARY

A multimedia processing chip, an electronic device, and a method for dynamic-image processing are provided in implementations of the disclosure, which can improve capabilities of image processing of the multimedia processing chip.

A multimedia processing chip is provided in implementations of the disclosure. The multimedia processing chip includes an image signal processor (ISP) configured to collect status information of image data and a neural-network processing unit (NPU) configured to process the image data with a neural-network algorithm. The multimedia processing chip is configured to perform pre-processing on the image data at least by the NPU, and transmit the status information and the image data subjected to the pre-processing to an AP chip.

An electronic device is provided in implementations of the disclosure. The electronic device includes a multimedia processing chip described above and an AP chip configured to obtain, from the multimedia processing chip, a result of the pre-processing and the status information collected, and perform post-processing on the result of the pre-processing based on the status information.

A method for dynamic-image processing is provided in implementations of the disclosure. The method includes the following. Dynamic-image data is obtained. A multimedia processing chip collects status information of the dynamic-image data and performs pre-processing on the dynamic-image data according to the dynamic-image data. The status information collected and the image data subjected to the pre-processing are transmitted by the multimedia processing chip to an AP chip. According to the status information, post-processing is performed by the AP chip on the dynamic-image data subjected to the pre-processing.

### BRIEF DESCRIPTION OF THE DRAWINGS

FIG. 1 is a first schematic structural diagram of an image processing apparatus provided in implementations of the disclosure.
FIG. 2 is a second schematic structural diagram of an image processing apparatus provided in implementations of the disclosure.
FIG. 3 is a schematic diagram of a first application scenario of the image processing apparatus illustrated in FIG. 1.
FIG. 4 is a schematic diagram of a second application scenario of the image processing apparatus illustrated in FIG. 1.
FIG. 5 is a schematic flowchart of a method for processing a video image by an image processing apparatus provided in implementations of the disclosure.
FIG. 6 is a first schematic structural diagram of a multimedia processing chip provided in implementations of the disclosure.
FIG. 7 is a second schematic structural diagram of a multimedia processing chip provided in implementations of the disclosure.
FIG. 8 is a third schematic structural diagram of a multimedia processing chip provided in implementations of the disclosure.
FIG. 9 is a fourth schematic structural diagram of a multimedia processing chip provided in implementations of the disclosure.
FIG. 10 is a schematic diagram illustrating a first data flow during processing of image data by a multimedia processing chip provided in implementations of the disclosure.
FIG. 11 is a schematic diagram illustrating a first method for processing image data by a multimedia processing chip provided in implementations of the disclosure.
FIG. 12 is a schematic diagram illustrating a second data flow during processing of image data by a multimedia processing chip provided in implementations of the disclosure.
FIG. 13 is a schematic diagram illustrating a second method for processing image data by a multimedia processing chip provided in implementations of the disclosure.
FIG. 14 is a schematic diagram illustrating a third data flow during processing of image data by a multimedia processing chip provided in implementations of the disclosure.
FIG. 15 is a schematic diagram illustrating a third method for processing image data by a multimedia processing chip provided in implementations of the disclosure.
FIG. 16 is a schematic diagram illustrating a fourth data flow during processing of image data by a multimedia processing chip provided in implementations of the disclosure.
FIG. 17 is a schematic diagram illustrating a fourth method for processing image data by a multimedia processing chip provided in implementations of the disclosure.
FIG. 18 is a fifth schematic structural diagram of a multimedia processing chip provided in implementations of the disclosure.
FIG. 19 is a schematic flowchart of a method for offline static-image processing provided in implementations of the disclosure.
FIG. 20 is a schematic flowchart of a method for editing a raw image by a multimedia processing chip provided in implementations of the disclosure.
FIG. 21 is schematic flowchart of a method for offline static-image processing provided in implementations of the disclosure.
FIG. 22 is a schematic flowchart of a method for processing image data of a playing video by a multimedia processing chip provided in implementations of the disclosure.
FIG. 23 is a sixth schematic structural diagram of a multimedia processing chip provided in implementations of the disclosure.
FIG. 24 is a seventh schematic structural diagram of a multimedia processing chip provided in implementations of the disclosure.
FIG. 25 is an eighth schematic structural diagram of a multimedia processing chip provided in implementations of the disclosure.
FIG. 26 is a first schematic structural diagram of an electronic device provided in implementations of the disclosure.
FIG. 27 is a second schematic structural diagram of an electronic device provided in implementations of the disclosure.
FIG. 28 is a third schematic structural diagram of an electronic device provided in implementations of the disclosure.
FIG. 29 is a schematic flowchart of a method for processing image data by an image signal processor in an AP chip provided in implementations of the disclosure.
FIG. 30 is a diagram illustrating comparison between implementations of the disclosure and related arts.
FIG. 31 is a diagram illustrating comparison between implementations of the disclosure and related arts.
FIG. 32 is a first schematic structural diagram of a circuit board provided in implementations of the disclosure.
FIG. 33 is a second schematic structural diagram of a circuit board provided in implementations of the disclosure.

### DETAILED DESCRIPTION

A multimedia processing chip, an electronic device, and a method for dynamic-image processing are provided in implementations of the disclosure. The multimedia processing chip can be integrated into a circuit board such as a mainboard, so as to be applied to an electronic device to realize image processing, thus improving image quality.

In implementations of the disclosure, the multimedia processing chip includes an image signal processor (ISP) configured to collect status information of image data and a neural-network processing unit (NPU) configured to process the image data with a neural-network algorithm. The multimedia processing chip is configured to perform pre-processing on the image data at least by the NPU, and transmit the status information and the image data subjected to the pre-processing to an AP chip.

In implementations of the disclosure, before processing the image data such as dynamic-image data, the AP chip may first collect status information from the image data such as dynamic-image data. When processing the image data such as dynamic-image data, the AP chip may process the image data based on the status information, so as to improve capability of image data processing. In addition, in the implementations of the disclosure, the image data is first processed by the multimedia processing chip, and then further processed by the AP chip, which can reduce power consumption of the AP chip.

In an optionally implementation of the disclosure, the ISP is further configured to perform first pre-processing on the image data, and the NPU is further configured to perform second pre-processing on the image data subjected to the first pre-processing.

In an optionally implementation of the disclosure, the ISP is further configured to perform third pre-processing on the image data subjected to the second pre-processing, where the ISP configured to perform the third pre-processing on the image data is configured to perform bit-width adjustment on the image data, such that a bit width of the image data subjected to the bit-width adjustment is the same as a bit width for processing image data by the AP chip.

In an optionally implementation of the disclosure, the first pre-processing performed on the image data by the ISP includes at least one of bad pixel correction (BPC), linearization, or black level correction (BLC).

In an optionally implementation of the disclosure, the first pre-processing performed on the image data by the ISP further includes image cropping and/or image down-scaling.

In an optionally implementation of the disclosure, the ISP is further configured to perform bit-width adjustment on the image data subjected to the neural-network algorithm, such that a bit width of the image data subjected to the bit-width adjustment is the same as a bit width for processing image data by the AP chip.

In an optionally implementation of the disclosure, the image data includes dynamic-image data and the multimedia processing chip is configured to process the dynamic-image data, wherein the neural-network algorithm used by the NPU to process the dynamic-image data includes at least one of: a nightscape algorithm, a high-dynamic range (HDR) algorithm, a blur algorithm, a denoising algorithm, a super-resolution algorithm, or a semantic segmentation algorithm.

In an optionally implementation of the disclosure, the multimedia processing chip is configured to process the dynamic-image data in real time, and transmit the dynamic-image data processed to the AP chip in real time.

In an optionally implementation of the disclosure, the image data includes static-image data and the multimedia processing chip is configured to process the static-image data, wherein the neural-network algorithm used by the NPU to process the static-image data includes at least one of: a nightscape algorithm, an HDR algorithm, a blur algorithm, a denoising algorithm, a super-resolution algorithm, or a semantic segmentation algorithm.

In an optionally implementation of the disclosure, the multimedia processing chip is further configured to process static-image data or dynamic-image data offline.

In an optionally implementation of the disclosure, the image data is raw image data and the multimedia processing chip is configured to process the raw image data.

In an optionally implementation of the disclosure, the status information includes at least one of automatic exposure (AE) status information, automatic white balance (AWB) status information, or automatic focus (AF) status information.

In an optionally implementation of the disclosure, the status information further includes lens shade correction (LSC) status information.

An electronic device is further provided in implementations of the disclosure. The electronic device includes the multimedia processing chip of any of claims 1-13, and the AP chip configured to obtain, from the multimedia processing chip, a result of the pre-processing and the status information collected, and perform post-processing on the result of the pre-processing based on the status information.

In an optionally implementation of the disclosure, the status information includes at least one of automatic focus (AF) status information, automatic white balance (AWB) status information, or automatic exposure (AE) status information, and the AP chip is configured to: calculate a focus parameter based on the AF status information and configure the focus parameter to a camera of the electronic device; calculate an AWB parameter based on the AWB status information and perform auto white balance on the result of the pre-processing based on the AWB parameter; and calculate an exposure parameter based on the AE status information, and configure the exposure parameter to the camera of the electronic device, or configure the exposure parameter after compensation to the camera of the electronic device.

In an optionally implementation of the disclosure, the AF status information includes phase detection auto focus (PDAF) status information and contrast detection auto focus (CDAF) status information, and the ISP of the multimedia processing chip is configured to obtain the CDAF status information by processing the image data with a preset algorithm, and extract the PDAF status information from the image data, and AP chip is further configured to: calculate a CDAF parameter based on the CDAF status information, and configure the CDAF parameter to the camera of the electronic device; and calculate a PDAF parameter based on the PDAF status information, and configure the PDAF parameter to the camera of the electronic device.

In an optionally implementation of the disclosure, the status information further includes lens shade correction (LSC) status information, and the AP chip is further configured to: calculate a LSC parameter based on the LSC status information, and perform lens shading correction on the pre-processing result based on the LSC parameter.

A method for processing dynamic-image data is further provided in implementations of the disclosure. The method includes the following. Dynamic-image data is obtained. A multimedia processing chip collects status information of the dynamic-image data and performs pre-processing on the dynamic-image data according to the dynamic-image data. The status information collected and the image data subjected to the pre-processing by the multimedia processing chip are transmitted to an AP chip. According to the status information, the AP chip performs post-processing on the dynamic-image data subjected to the pre-processing.

In an optionally implementation of the disclosure, performing the pre-processing on the dynamic-image data by the multimedia processing chip includes the following. The dynamic-image data is optimized. The dynamic-image data subjected to the optimizing is processed with a neural-network algorithm.

In an optionally implementation of the disclosure, the status information includes at least one of automatic focus (AF) status information, automatic white balance (AWB) status information, or automatic exposure (AE) status information, and performing according to the status information, by the AP chip, post-processing on the dynamic-image data after the pre-processing includes: calculating a focus parameter based on the AF status information and configuring the focus parameter to a camera; calculating an AWB parameter based on the AWB status information and performing auto white balance on a result of the pre-processing based on the AWB parameter; and calculating an exposure parameter based on the AE status information, and configuring the exposure parameter to the camera of the electronic device, or configuring the exposure parameter after compensation to the camera.

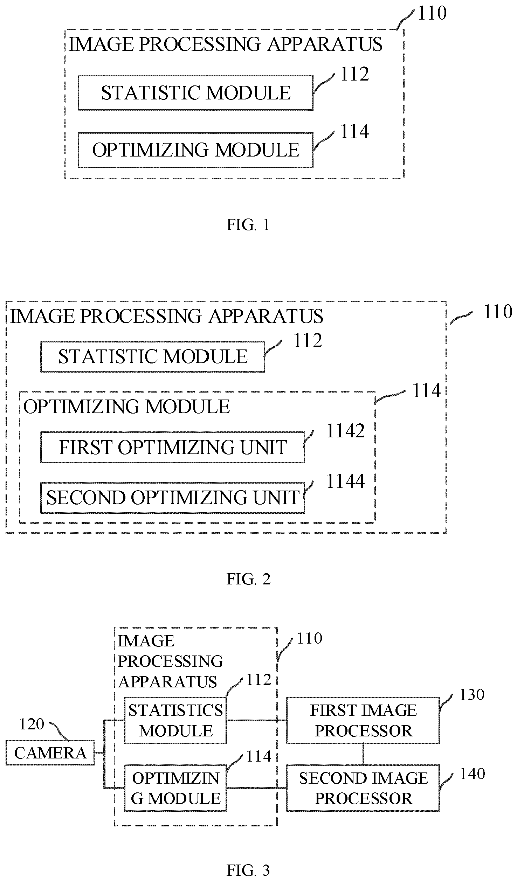

Exemplarily, referring to FIG. 1, an image processing apparatus 110 may process obtained data, such as raw data, to facilitate further processing of the image data by other image processors, thus improving image quality.

The image processing apparatus 110 may process static-image data, such as static-image data obtained by a user in a photographing mode. The image processing apparatus 110 may also process dynamic-image data, such as dynamic-image data obtained by a user in a preview mode or a video-recording mode.

It can be understood that both the static-image data and the dynamic-image data can be processed by a processor of a system-on-a-chip (SoC). The SoC can be understood as an AP chip, and the processor of the SoC can be understood as an image signal processor (ISP) and an application processor (AP). However, the SoC generally has limited processing capabilities for image data. As users have higher and higher requirements for image quality, processing image data only by the SoC usually cannot meet user requirements.

In order to improve the image quality (which can be understood as the quality of image display), some implementations of the disclosure may provide an image pre-processor (pre-ISP), such as a neural-network processing unit (NPU), to first pre-process the image and then transmit a result of the pre-processing to the SoC. The SoC takes the processing result of the pre-ISP as input data and performs post-processing. Thereby, the image quality can be improved.

In the disclosure, in the actual research and development process, it has been found that for static-image data, the pre-processing on the static-image data by the pre-ISP generally will not damage status information of the static-image data. After the pre-processing of the static-image data by the pre-ISP, the static-image data can be directly transmitted to the SoC, and the SoC can directly perform post-processing on the static-image data that was processed by the pre-ISP.

The status information can be understood as the information required by the SoC to perform post-processing on the image data, that is, the SoC can perform, based on the status information, post-processing on the pre-processing result of the image data.

The status information may include automatic white balance (AWB) status information, automatic exposure (AE) status information, and automatic focus (AF) status information, which may be referred to as 3A status information. The status information can also be understood as status data. It should be noted that the status information is not limited to the above. Such status information also includes lens shade correction (LSC) status information. The AWB status information can be understood as status information required for white balance processing. The AE status information can be understood as status information required for exposure. The AF status information can be understood as status information required for focusing. The LSC status information can be understood as status information required for lens shade correction.

However, pre-processing of dynamic-image data such as video image data by the pre-ISP, such as NPU, may damage status information of the dynamic-image data, such as image color, image brightness, data required for focusing, and the like. Even if the pre-ISP transmits the pre-processing result of the dynamic-image data to the SoC, since the status information was damaged during the pre-processing of the dynamic-image data by the pre-ISP such as the NPU, the SoC cannot perform post-processing on the basis of the preprocessing by the pre-ISP.

To this end, in some implementations of the disclosure, a statistics module 112 in an image processing apparatus, such as the image processing apparatus 110 illustrated in FIG. 1, may be configured to collect dynamic-image data, so as to obtain status information from the dynamic-image data. After a pre-ISP such as an NPU pre-processes the dynamic-image data, the SoC can post-process the result of the pre-processing based on the status information obtained by the statistics module 112 of the image processing apparatus 110, thus improving the dynamic-image quality.

However, it can be understood that, for dynamic-image data, no matter during playing or recording, issues such as video stuttering will have a great impact on the user. In order to maintain the continuity of the video images as much as possible, or in other words, to reduce or even eliminate the stuttering issue of the video images as much as possible, in some implementations of the disclosure, during processing of the dynamic-images, the dynamic-images are first optimized to reduce or even eliminate the stuttering issue.

To this end, in some implementations of the disclosure, an optimizing module 114 in an image processing apparatus, such as the image processing apparatus 110 illustrated in FIG. 1, may be configured to optimize the dynamic-image data, so as to solve the problem such as bad pixel existing in the dynamic-image data. The optimized data is then transmitted to the pre-ISP such as the NPU, so that the convergence of the NPU can be accelerated to shorten the time required for the NPU to process one image frame, thereby ensuring that the NPU can process one frame of dynamic-image data within a preset time period. For example, the preset time period may be 33nm (milliseconds).

Optimization of the dynamic-image data by the optimizing module 114 may include at least one of bad pixel correction (BPC), linearization, or black level correction (BLC). An algorithm for optimizing the dynamic-image data by the optimizing module 114 may include at least one of a BLC algorithm, a BPC algorithm, or a linearization algorithm. The optimizing module 114 can execute the BLC algorithm to realize BLC of the dynamic-image data, the optimizing module 114 can execute the BPC algorithm to realize bad pixel correction of the dynamic-image data, and the optimizing module 114 can execute the linearization algorithm to realize linearization of the dynamic-image data.

It should be noted that the optimization performed by the optimizing module 114 on the dynamic-image data is not limited to the above. For example, the optimization performed by the optimizing module 114 on the dynamic-image data may further include at least one of image cropping or image down-scaling (Bayerscaler). The algorithm for optimizing the dynamic-image data by the optimizing module 114 may include at least one of an image cropping algorithm or an image down-scaling algorithm. The optimizing module 114 can execute the image cropping algorithm to realize cropping of the dynamic-image, and the optimizing module 114 can execute the image down-scaling algorithm to realize down-scaling of the dynamic-image.

In some implementations of the disclosure, several different optimizing modules may be configured to execute different algorithms respectively, so as to achieve different optimization results. The optimizing module can also be divided into several optimizing sub-modules to execute different algorithms respectively to achieve different optimization results.

Referring to FIG. 2, the optimizing module 114 of the image processing apparatus 110 may include multiple optimizing sub-modules, and the optimizing sub-module may be referred to as an optimizing unit herein. For example, the optimizing module 114 includes a first optimizing unit 1142 and a second optimizing unit 1144. The first optimizing unit 1142 may perform BPC on the dynamic-image data, and the second optimizing unit 1144 may perform linearization on the dynamic-image data. Therefore, it can be ensured that the data optimized by the optimizing module 114 can speed up the convergence of the pre-ISP such as the NPU, so as to ensure that the pre-ISP such as the NPU can process one image frame within the preset time period, thus solving the stuttering issue.

It can be understood that the optimizing units of the optimizing module 114 are not limited to the first optimizing unit 1142 and the second optimizing unit 1144. For example, the optimizing module 114 may also include a third optimizing unit, and the third optimizing unit may perform BLC on the dynamic-image data. The optimizing module 114 may further include a fourth optimizing unit that can perform image cropping on the dynamic-image data. The optimizing module 114 may further include a fifth optimizing unit that can perform image down-scaling on the dynamic-image data.

It should be noted that the number and functions of the optimizing units of the optimizing module 114 are not limited, the above are only some examples of the optimizing units of the optimizing module in some implementations of the disclosure. The functional sub-modules of the optimizing module 114 that can speed up, after optimization on the dynamic-image data, the convergence of the pre-ISP such as the NPU in processing the dynamic-image data are all within the protection scope of the disclosure.

It should also be noted that the optimizing module 114 performing optimization on the dynamic-image data may be not designed to speed up the convergence of processing of the dynamic-image data by the pre-ISP such as the NPU. The optimization of the dynamic-image data by the optimizing module 114 can be designed according to actual needs.

The image processing apparatus 110 provided in implementations of the disclosure may also collect static-image data to obtain status information. The image processing apparatus 110 provided in implementations of the disclosure may further optimize the static-image data, so as to improve static-image quality.

The above description is made from the perspective of the statistics module 112 and the optimizing module 114 in implementations of the disclosure. In order to further illustrate the data flow in processing data by the image processing apparatus 110 in the implementations of the disclosure, the image processing apparatus 110 of the implementations of the disclosure is described below in combination with other circuits.

Referring to FIG. 3, the image processing apparatus 110 may be connected with one or more cameras 120 to obtain image data collected by the cameras 120, such as dynamic-image data. It can also be understood that the image processing apparatus 110 is connected to the camera(s) 120 and can receive dynamic-image data transmitted by the camera 120 to the image processing apparatus 110. The dynamic-image data can be transmitted in two paths, one path to the statistics module 112 and the other path to the optimizing module 114.

It can be understood that, the electrical connection between two devices defined in the implementations of the disclosure can be understood as a connection of the two devices through signals, such as wires which can realize signal transmission. Of course, the electrical connection between two devices can also be understood as that two devices are connected together, such as welded together.

After receiving the dynamic-image data, the statistics module 112 may collect some information based on the dynamic-image data, where the information may be referred to as status information, such as 3A status information and the like. After the statistics module 112 completes data collection, that is, after the statistics module 112 collects the status information, the status information may be directly transmitted to a first image processor 130. The first image processor 130 can be understood as a processor on SoC, such as an ISP and an AP.

After receiving the dynamic-image data, the optimizing module 114 may perform one or more optimization on the dynamic-image data, such as BPC, linearization, and the like. After the optimization of the dynamic-image data by the optimizing module 114, the optimized dynamic-image data may be transmitted to a second image processor 140. The second image processor 140 may be understood as a pre-ISP, such as an NPU.

It should be noted that, in actual production, the first image processor 130, the second image processor 14, and the image processing device 110 need to be produced respectively, and thus additional cost will be introduced in the production stage. In the signal transmission and processing stage, some signals will be additionally transmitted from one device to another, which will increase time and power consumption.

To this end, in order to save cost, time, and power consumption, in some other implementations of the disclosure, the second image processor 140, the statistics module 112 and the optimizing module 114 may be integrated into one device.

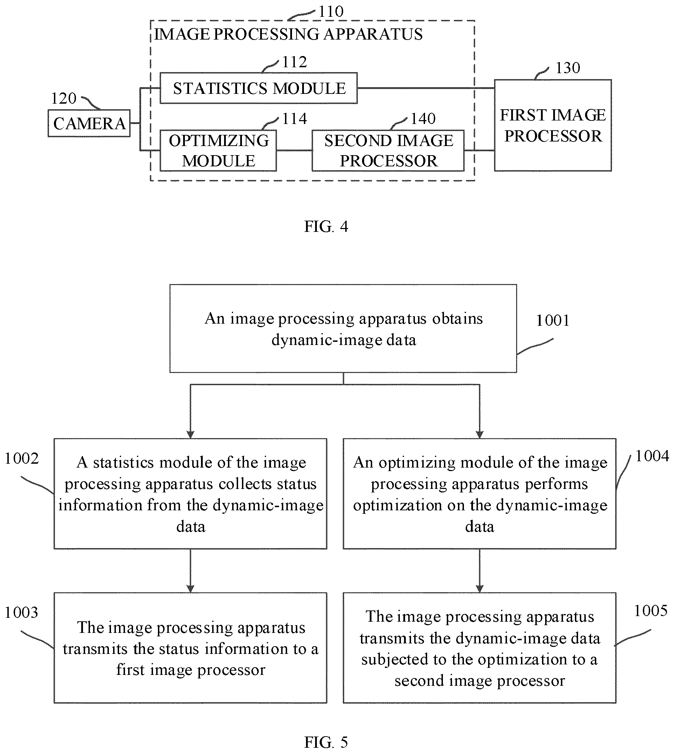

Referring to FIG. 4. FIG. 4 is different from FIG. 3 in that the second image processor 140, the statistics module 112 and the optimizing module 114 are integrated into one device, called image processing apparatus 110 for example. Therefore, in terms of structure, the statistics module 112, the optimizing module 114 and the second processor 140 can be integrated together, which can save cost, speed up the rate of mutual data transmission, and save time and power consumption.

To sum up, in some implementations of the disclosure, the image processing apparatus 110 can not only collect some status information, but also perform optimization on dynamic-image data. Therefore, the convergence of the per-ISP such as the NPU can be accelerated, so as to ensure that the processing of one image frame is completed within the preset time period, and further ensure that the first image processor 130 can perform post-processing based on the status information obtained by the statistics module 112 and the pre-processing result of the pre-ISP, thus improving dynamic-image quality. After processing the dynamic-image data in RAW format, the first image processor 130 may perform format conversion on the dynamic-image data, such as converting the RAW-format image data into YUV-format image data. The first image processor 130 may also process the YLJV format image data, such as RGBToYUV The first image processor 130 may display the processed image data on the display screen and store the same into a memory.

In order to further illustrate the data flow in image processing by the image processing apparatus 110 in the implementations of the disclosure, the following description is made from the perspective of a method for processing data by the image processing apparatus 110.

Referring to FIG. 5, a method for dynamic-image processing includes the following.

At block 1001, the image processing apparatus 110 obtains dynamic-image data. The image processing apparatus 110 may obtain the dynamic-image data from a camera 120. The dynamic-image data may be raw data.

At block 1002, a statistics module 112 of the image processing apparatus 110 collects status information from the dynamic-image data. The status information may include 3A status information.

At block 1003, the image processing apparatus 110 transmits the status information collected by the statistics module to a first image processor 130. The first image processor 130 may be understood as an AP and ISP in an SoC, and can perform image processing based on the status information. For example, the status information includes 3A status information, and the first image processor 130 may perform 3A processing based on the 3A status information. The 3A processing may be understood as processing based on the 3A status information.

At block 1004, an optimizing module 114 of the image processing apparatus 110 performs optimization on the dynamic-image data. The optimization may include at least one of BPC, linearization, or BLC of the dynamic-image data.

At block 1005, the image processing apparatus 110 transmits the dynamic-image data subjected to the optimization to a second image processor 140. The second image processor 140 may be understood as an NPU. By transmitting the dynamic-image data subjected to the optimization to the second image processor 140, the second image processor 140 can process one frame in the dynamic-image data within a preset time period, or in other words, convergence of processing of the dynamic-image data can be accelerated. In this way, the second image processor 140 can transmit the processed dynamic-image data to the first image processor 130 in real time, so as to solve the stuttering issue.

The NPU can process the optimized dynamic-image data with a neural network algorithm, and can transmit the processed image data to the first image processor 130. Based on the status information, the first image processor 130 can perform post-processing, such as 3A processing, on the dynamic-image data that was processed with the neural network algorithm.

It should be noted that some algorithms used in processing the dynamic-image data by the second image processor, such as the NPU, may result in a bit width of data that is greater than a bit width for processing image data by the first image processor. To this end, in implementations of the disclosure, after receiving the processing result of the image data from the second image processor such as the NPU, bid-width adjustment may be performed on the processing result of the second image processor by the optimizing module 114, so that the data subjected to the bit-width adjustment may have a bit width suitable for data processing of the first image processor. The dynamic-image data subjected to bit-width adjustment then may be transmitted to the first image processor, such that the first image processor may perform further processing on the data subjected to bit-width adjustment based on benchmark data.

The following is a detailed description from the perspective of the statistics module, the optimizing module, and the NPU which are integrated together.

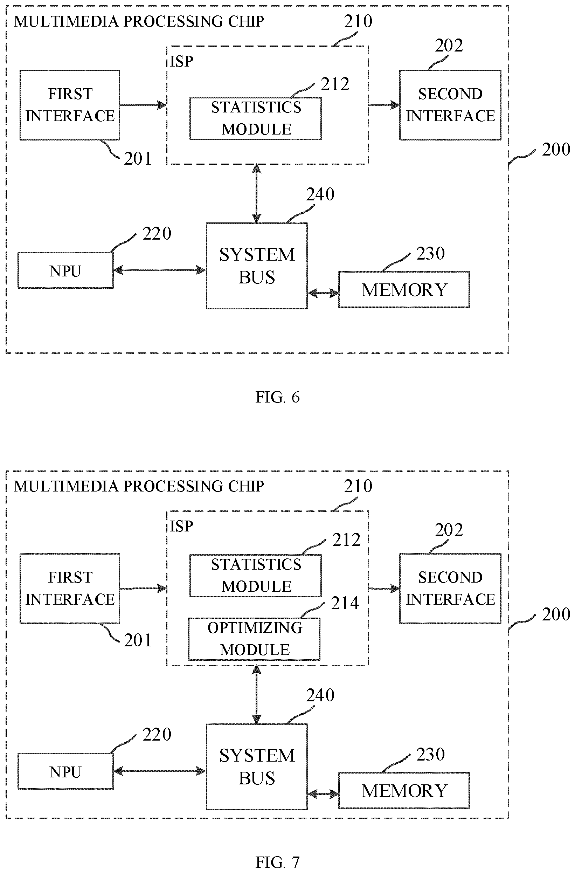

Referring to FIG. 6, a multimedia processing chip such as the multimedia processing chip 200 can process the obtained image data, such as RAW data, to improve image quality. It should be noted that the multimedia processing chip 200 can transmit a processing result to an AP chip, so that the AP chip can perform post-processing on the image data for display or storage. The image data can also be understood as image information.

The RAW data retains more details than other image data such as YUV data.

The multimedia processing chip 200 may include a neural network processing unit (NPU) 220, the NPU 220 may enhance the image data obtained by the multimedia processing chip 200. The NPU 220 may enhance the image data with an image processing algorithm by running an artificial intelligent (AI)-trained network. The NPU 220 has high efficiency in processing image data, and can improve image quality significantly.

In some implementations of the disclosure, the NPU 220 may be a dedicated processor for image processing, which may be referred to as a dedicated processor for short. Hardware implementation can be achieved by hardware configuration such as circuit arrangement and programming, so as to ensure the stability of the NPU 220 in processing image data, and reduce power consumption and time required by the NPU 220 to process image data. It can be understood that when the NPU 220 is a dedicated processor, the dedicated processor is for processing image data and cannot process other data such as text information. It should be noted that, in other implementations, the NPU 220 may also process other information such as text information.

The NPU 220 may process the image data in such a manner that data blocks are read and processed by row. For example, the NPU 220 reads and processes the data blocks by multiple rows. It can be understood that one image frame may have multiple rows of data blocks, that is, the NPU 220 may process a part of one image frame, such as 1/n frame, where n is a positive integer, such as 2, 4, 5, etc. When the NPU 220 has not finished processing the image frame, the NPU 220 may store in a built-in cache the data of the multiple rows of data blocks during processing of the one image frame by the NPU 220. After the NPU 220 finishes processing of the image frame, the NPU 220 can write the processed data into a memory, such as the memory 230 of the multimedia processing chip 200. The memory 230 may be built in the multimedia processing chip 200, or may be external. The data transfer can be implemented using a memory controller.

The NPU 220 can process the RAW data. It can be understood that the information of the RAW data is relatively complete. Compared with processing the YUV data, processing the RAW data by the NPU 220 can improve the image quality with more details.

It should be noted that in the data flow, the NPU 220 can complete processing within the preset time period. The preset time period is, for example, 30fps = 33ms (milliseconds). In other words, the preset time period for the NPU 220 to process one image frame is 33ms, which can ensure that the NPU 220 can realize real-time data transmission on the basis of fast processing of image data.

It should be noted that some NPUs process images by loading an image frame from a memory storing image data, and processing the image frame with a corresponding algorithm. During the processing, temporary data calculated by a convolution layer of the NPU generally needs to be stored in the memory. It can be seen that, compared with these NPUs, the NPU 220 as the dedicated NPU in some implementations of the disclosure can speed up the processing of image data and ensure that one image frame can be processed within the preset time period.

The NPU 220 may process dynamic-image data, such as dynamic-image data obtained by a user in a video-recording mode. The NPU 220 may include algorithms for processing the dynamic-image data, such as a nightscape algorithm, an HDR algorithm, a blur algorithm, a denoising algorithm, a super-resolution algorithm, and the like. The dynamic-image data may include image data of a recorded video, image data of video playback, and data of a preview image. In this implementation of the disclosure, the dynamic-image data may be understood as video image data.

The NPU 220 may also process static-image data, such as static-image data obtained by the user in the photographing mode. The NPU 220 may include algorithms for processing static-image data, such as an HDR algorithm, a nightscape algorithm, a blur algorithm, a denoising algorithm, a super-resolution algorithm, or a semantic segmentation algorithm and the like. It should be noted that the static-image data may also include an image(s) displayed when entering an album application.

The NPU 220 in the implementations of the disclosure can process both dynamic-image data and static-image data, so that the multimedia processing chip 200 can be applied to different scenarios, such as a photographing scenario or a video recording scenario. It should be noted that, the NPU 220 in implementations of the disclosure may also only process dynamic-image data and do not process static-image data. For example, in the following, the NPU 220 processes dynamic-image data.

It should be noted that, after the multimedia processing chip 200 obtains image data such as dynamic-image data, if the dynamic-image data is directly processed by the NPU 220, the NPU 220 processes the dynamic-image data with a preset algorithm according to requirements to obtain a processing result. However, the dynamic-image data is often distorted after the NPU 220 processes the dynamic-image data with the preset algorithm. If the multimedia processing chip 200 transmits the distorted data resulted from processing by the NPU 220 to the AP chip, the AP chip will obtain incorrect status information of the dynamic-image data, such as the status information required for auto-focusing, which will cause failure of focusing of the camera. The dynamic-image data can be understood as data received but not processed by the multimedia processing chip 200. For example, the data transmitted by an image sensor to the multimedia processing chip 200 is defined as original dynamic-image data.

Based on the above, in some implementations of the disclosure, a statistics module may be integrated into the multimedia processing chip 200, and the statistics module is configured to collect the data required for processing image data by the AP chip, or in other words, collect status information required for processing image data by the AP chip. After the statistics module collects the data required by the AP chip, the data can be transmitted to the AP chip to ensure that the AP chip can successfully complete image data processing, such as 3A processing.

Still referring to FIG. 6, in some implementations of the disclosure, the statistics module may be integrated into an image signal processor (ISP) 210. In other words, the multimedia processing chip 200 may further include the ISP 210. The ISP 210 includes a statistics module 212. After the multimedia processing chip 200 obtains original dynamic-image data, the original dynamic-image data may be first transmitted to the ISP 210, and then collected by the statistics module 212 of the ISP 210, to collect the status information such as 3A status information required by the AP chip. In this way, it can be ensured that the AP chip performs, based on the status information collected by the statistics module 212, post-processing on the processing result transmitted by the multimedia processing chip 200 to the AP chip.

It can be understood that the status information collected by the statistics module 212 of the ISP 210 is not limited to the 3A status information. For example, the statistics module 212 of the ISP 210 may collect status information such as LSC status information.

It should also be noted that, after the multimedia processing chip 200 obtains the dynamic-image data, if the dynamic-image data is directly processed by the NPU 220, the NPU 220 processes the dynamic-image data with a preset algorithm according to requirements to obtain a processing result. However, problems such as bad pixels may exist in the dynamic-image data, directly processing the dynamic-image data with the preset algorithm by the NPU 220 will slow down the convergence of the NPU 220, thereby prolong the time required for the NPU 220 to process one image frame, causing it difficult to achieve fast image processing and improve image quality efficiently.

Based on the above, in some implementations of the disclosure, an optimizing module may be integrated into the ISP 210. The optimizing module may perform first preprocessing, such as BPC, on the dynamic-image data to obtain a first pre-processing result. Then the NPU 220 performs the second preprocessing on the pre-processing result. In this way, not only the problems such as image bad pixels can be solved, but also the convergence of the neural network algorithm of the NPU 220 can be improved, thus ensuring that the NPU 220 can complete processing of one image frame within a preset time and achieving fast and real-time processing of images.

Referring to FIG. 7, the ISP 210 further includes an optimizing module 214. The optimizing module 214 can perform BPC on the dynamic-image data, and the optimizing module 214 can execute a BPC algorithm to achieve BPC of the dynamic-image data. The optimizing module 214 can perform linearization on the dynamic-image data, and the optimizing module 214 can execute a linearization algorithm to achieve linearization processing of the dynamic-image data. The optimizing module 214 can perform BLC on the dynamic-image data, and the optimizing module 214 can execute a BLC algorithm to realize BLC of the dynamic-image data.

It can be understood that the first pre-processing performed by the optimizing module 214 of the ISP 210 on the dynamic-image is not limited to the above. For example, the optimizing module 214 can perform image cropping on the original image data, and the optimizing module 214 can execute an image cropping algorithm to achieve cropping of dynamic-image data. For another example, the optimizing module 214 can perform image down-scaling on the dynamic-image data, and the optimizing module 214 can execute an image down-scaling algorithm to achieve down-scaling of the dynamic-image data.

It should also be noted that, after the NPU 220 finishes processing of the image data, the multimedia processing chip 200 may directly transmit the data processed by the NPU 220 to the AP chip. However, in some cases, a bit width of the data subjected to processing by the NPU 220 tends to be different from a bit width of data required for processing by the AP chip. For example, a bit width of dynamic-image data after processed by the NPU 220 with a video HDR algorithm is 20 bits, while a bit width of the data to be processed by the AP chip is 14 bits. Therefore, the bit width of the image data processed by the NPU 220 exceeds the bit width of the data to be processed by the AP chip. In this case, it is necessary to perform bit-width adjustment on the data processed by the NPU 220, so that the bit width of the data transmitted from the multimedia processing chip 200 to the AP chip is the same as the bit width of the data to be processed by the AP chip.

Based on the above, after the NPU 220 of the multimedia processing chip 200 in some implementations of the disclosure processes the dynamic-image data, the optimizing module 214 of the ISP 210 may first perform bit-width adjustment (or referred to as tone mapping) on the dynamic-image data, so that the bit width of the data adjusted by the optimizing module 214 is the same as the bit width of the data to be processed by the AP chip. Therefore, it can be ensured that after the data processed by the multimedia processing chip 200 is transmitted to the AP chip, the AP chip can perform post-processing on the data to improve the image quality.

In some implementations of the disclosure, several different optimizing modules may be configured to execute different algorithms respectively, so as to achieve different optimization results. Optionally, the optimizing module 214 may be divided into several optimizing sub-modules each executing a different algorithm, to achieve different optimization results. For example, a sub-module of the optimizing module 214 can perform BPC on the dynamic-image data, a sub-module of the optimizing module 214 can perform linearization on the dynamic-image data, and a sub-module of the optimizing module 214 can perform BLC on the dynamic-image data, a sub-module of the optimizing module 214 can perform image cropping on the dynamic-image data, a sub-module of the optimizing module 214 can perform image down-scaling on the dynamic-image data, and a sub-module of the optimizing module 214 can perform bit-width adjustment on the image data.

It should be noted that the optimizing module 214 may include one or more of the above sub-modules. The optimizing module 214 may perform one or more of the above operations, thereby ensuring that data transmitted from the multimedia processing chip 200 to the AP chip can be further processed by the AP chip. In addition, it can also be ensured that the NPU 220 can speed up the convergence, so as to improve image quality. It can be understood that the optimizing module 214 may also have other sub-modules, which will not be illustrated in more detail.

Still referring to FIG. 6 and FIG. 7, the multimedia processing chip 200 may include a first interface 201 and a second interface 202. Both the first interface 201 and the second interface 202 may be a mobile industry processor interface (MIPI). The first interface 201 can receive image data such as RAW data. For example, the first interface 201 may receive RAW data obtained from a camera. The image data such as RAW data received by the first interface 201 can be original image data, that is, the image data received by the first interface 201 is unprocessed image data. Specifically, the original image data can be understood as image data without processing by an image processor. After the first interface 201 receives the image data such as the original image data, the image data can be transmitted to the ISP 210.

The second interface 202 can receive a processing result of the image data from the ISP 210. The second interface 202 can also receive a result of processing the image data by the NPU 220. The second interface 202 can be connected with the AP chip, so as to transmit the image data such as dynamic-image data received by the second interface 202 to the AP chip.

The first interface 201 and the second interface 202 can be connected through the ISP 210. The data received by the first interface 201 can be transmitted in two paths, for example, one path to the statistics module 212 of the ISP 210, and the other path to the memory 230 for storage or to the optimizing module 214 for processing. The second interface 202 may transmit data collected by the statistics module 212. The second interface 202 may also transmit data processed by the optimizing module 214.

Still referring to FIG. 6 and FIG. 7, the memory 230 stores various data and instructions of the multimedia processing chip 200. For example, the memory 230 can store the original image data. The memory 230 can store the data processed by the optimizing module 214. The memory 230 can store the data processed by the NPU 220. The memory 230 can also store an operating system of the multimedia processing chip 200. The number of memories 230 may be one, two, three, or even more. The type of memory 230 may be static memory or dynamic memory, such as double data rate (DDR) SDRAM. The memory 230 may be built-in or external. For example, in the encapsulation process, the ISP 210, the NPU 220 and other devices are encapsulated first, and then encapsulated together with the memory 230.

Data transmission of the multimedia processing chip 200 may be implemented by one or more memory access controllers.

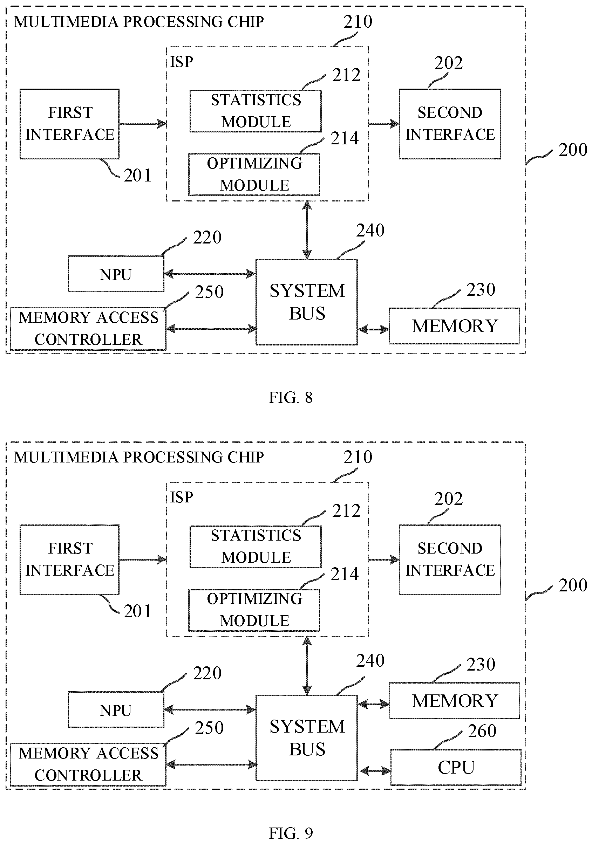

Referring to FIG. 8, the multimedia processing chip 200 may further include a memory access controller 250, which may be a direct memory access (DMA) controller that has high data-transfer efficiency and can transfer large amount of data. The DMA controller 250 may transfer data from one address space to another. For example, the DMA controller 250 may transfer data stored in memory 230 to NPU 220.

The DMA controller 250 may include an advanced high-performance bus (AHB) DMA controller, or an advanced extensible interface (AXI) DMA controller.

Still referring to FIG. 6 to FIG. 8, various components of the multimedia processing chip 200 may be connected through a system bus 240. For example, the ISP 210 is connected to the system bus 240, the NPU 220 is connected to the system bus 240, the memory 230 is connected to the system bus 240, and the memory access controller 250 is connected to the system bus 240.

System operation of the multimedia processing chip 200 can be controlled by a control processor.

Referring to FIG. 9, the multimedia processing chip 200 may further include a central processing unit (CPU) 240, and the CPU is configured to control the system operation of the multimedia processing chip 200, such as peripheral-parameter configuration, control of interrupt response, etc.

In order to further illustrate the process of processing image data especially dynamic-image data by the multimedia processing chip provided in implementations of the disclosure, in combination with FIG. 5 to FIG. 8, a data flow and a method for processing data by the multimedia processing chip are described below.

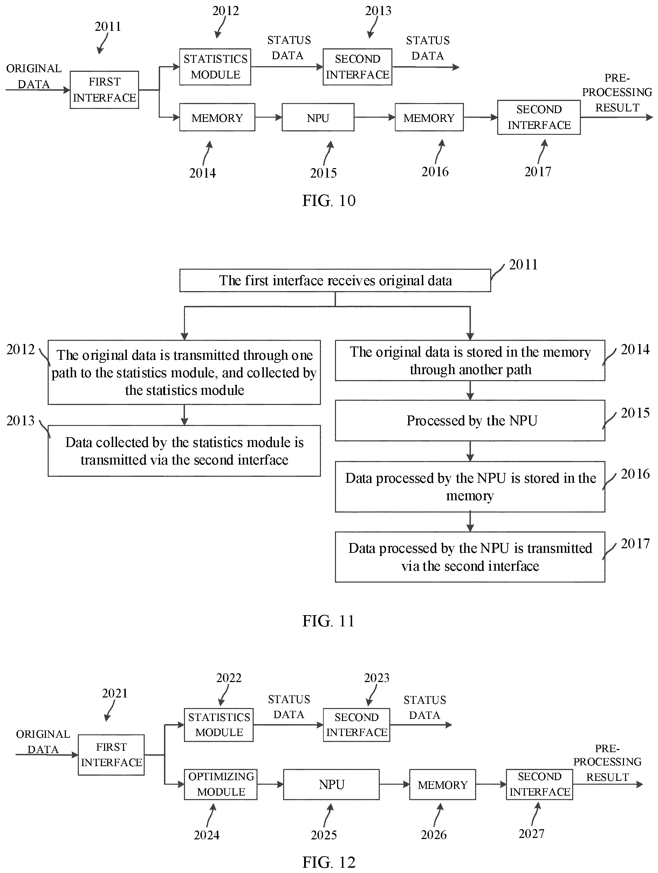

Referring to FIG. 10 and FIG. 11, the method for processing data by the multimedia processing chip 200 includes the following.

At block 2011, the first interface 201 of the multimedia processing chip 200 receives original data, such as dynamic-image data.

At block 2012, the original data is transmitted through one path to the statistics module 212 of the ISP 210, and the statistics module 212 collects status information of the received original data. It should be noted that the original data may also be first stored in the memory 230 and then the statistics module 212 collects status information of the original data stored in the memory 230.

At block 2013, data collected by the statistics module 212 is transmitted for example to an AP chip via the second interface 202. It should be noted that the data, such as status information collected by the statistics module 212 may be first stored in the memory 210 and then transmitted via the second interface 202.

At block 2014, the original data is stored in the memory 230 through another path.

At block 2015, the original data stored in the memory 230 is transmitted to and processed by the NPU 220. Optionally, the NPU 220 obtains the original data form the memory 230 and processes the original data with a neural network algorithm for example.

At block 2016, data processed by the NPU 220 is stored in the memory 230. In this case, a result of processing the data by the NPU 220 may be referred to as a pre-processing result.

At block 2017, the data processed by the NPU 220 is transmitted for example to the AP chip via the second interface 202.

The above describes the first method for data processing by the multimedia processing chip 200 according to the implementations of the disclosure. The AP chip can further process the processing result from the NPU 220 based on the status information to improve image quality, such as quality of video playback.

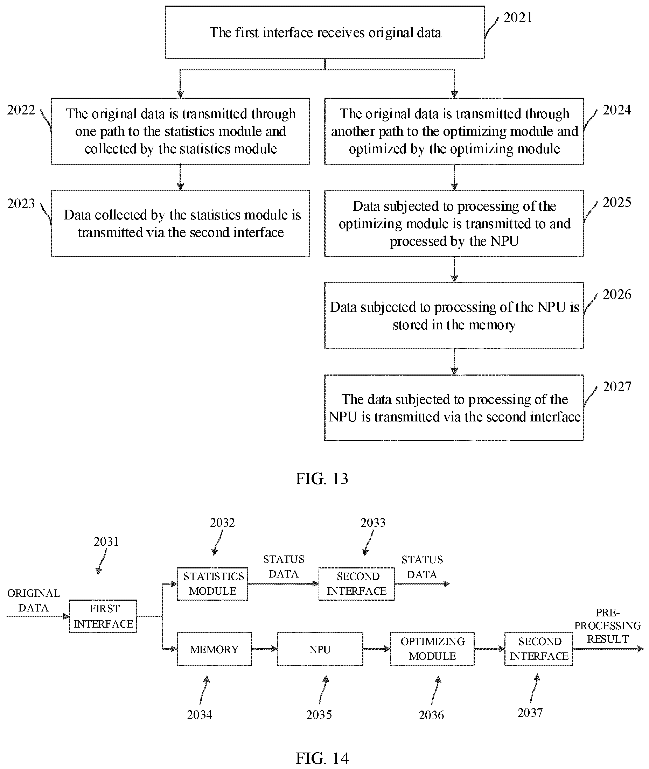

Referring to FIG. 12 and FIG. 13, a method for processing data by the multimedia processing chip 200 includes the following.

At block 2021, the first interface 201 of the multimedia processing chip 200 receives original data, such as dynamic-image data.

At block 2022, the original data is transmitted through one path to the statistics module 212 of the ISP 210, and the statistics module 212 collects status information of the received original data. It should be noted that the original data may also be first stored in the memory 230 and then the statistics module 212 collects status information of the original data stored in the memory 230.

At block 2023, data collected by the statistics module 212 is transmitted for example to an AP chip via the second interface 202. It should be noted that the status information collected by the statistics module 212 may also be first stored in the memory 230 and then transmitted via the second interface 202.

At block 2024, the original data is transmitted through another path to the optimizing module 214, and the optimizing module 214 performs optimization on the original data, such as BLC, linearization, etc.

At block 2025, data subjected to processing of the optimizing module 214 is transmitted to and processed by the NPU 220. It should be noted that the data processed by the optimizing module 214 may be first transmitted to the memory 230, and then the data subjected to processing of the optimizing module 214 and stored in the memory 230 may be transmitted to and processed by the NPU 220.

At block 2026, data subjected to processing of the NPU 220 is stored in the memory 230. In this case, a result of processing the data by the NPU 220 may be referred to as a pre-processing result.

At block 2027, the data subjected to processing of the NPU 220 is transmitted for example to the AP chip via the second interface 203.

The above is the second method for data processing by the multimedia processing chip 200 according to implementations of the disclosure. In the multimedia processing chip 200, the original data may be transmitted through different paths respectively to the statistics module 212 for data collecting and to the optimizing module 214 for optimization. The optimized data may then be processed by the NPU 220, and the data processed by the NPU 220 and the status information may be transmitted to the AP chip. In this way, it is ensured that the AP chip can perform further processing on the processing result of the NPU 220 based on the status information, so as to improve the image quality such as the quality of video playback. In addition, the convergence of the NPU 220 can also be accelerated to improve the smoothness of video playback.

It should also be noted that after the optimizing module 214 of the multimedia processing chip 200 performs optimization such as BPC and linearization on the data, the AP chip does not need to perform corresponding processing on the received image data. For example, the optimizing module 214 performs BPC, linearization, and BLC on the image data, so the AP chip does not need to perform BPC, linearization, or BLC on the received image data, which can reduce power consumption of the AP chip.

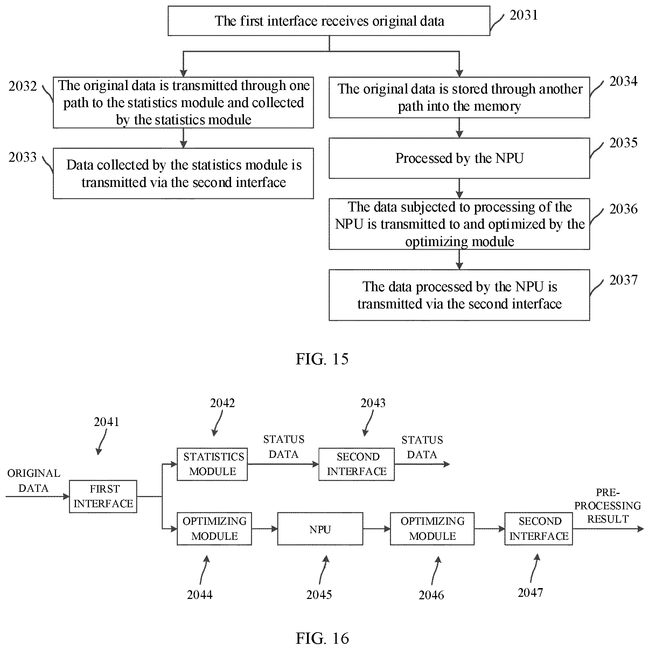

Referring to FIG. 14 and FIG. 15, a method for processing data by the multimedia processing chip 200 includes the following.

At block 2031, the first interface 201 of the multimedia processing chip 200 receives original data, such as dynamic-image data.

At block 2032, the original data is transmitted through one path to the statistics module 212 of the ISP 210, and the statistics module 212 collects status information of the received original data. It should be noted that the original data may also be first stored in the memory 230 and then the statistics module 212 collects status information of the original data stored in the memory 230.

At block 2033, data collected by the statistics module 212 is transmitted for example to an AP chip via the second interface 202. It should be noted that the status information collected by the statistics module 212 may also be first stored in the memory 230 and then transmitted via the second interface 202.

At block 2034, the original data is stored through another path into the memory 230.

At block 2035, the original data stored in the memory 230 is transmitted to and processed by the NPU 220. Optionally, the NPU 220 obtains the original data form the memory 230 and processes the original data, for example, with a neural network algorithm.

At block 2036, the data subjected to processing of the NPU 220 is transmitted to the optimizing module 214, and the optimizing module 214 performs bit-width adjustment on the data subjected to processing of the NPU 220, so that a bit width after adjustment is the same as a bit width required for processing data by the AP chip. In this way, a result of processing data by the optimizing module 214 can be referred to as a pre-processing result. It should be noted that, the data processed by the NPU 220 may be first transmitted to the memory 230, and the data stored in the memory 230 and processed by the NPU 220 is transmitted to the optimizing module 214. At last, the optimizing module 214 adjusts the bit width of the data processed by the NPU 220.

At block 2037, the data subjected to bit-width adjustment of the optimizing module 214 is transmitted via the second interface 203 for example to the AP chip.

The above is the third method for processing data by the multimedia processing chip 220 in implementations of the disclosure, which can ensure that the AP chip can further process the data after bit-width adjustment based on the status information, so as to improve the image quality, such as the quality of video playback.

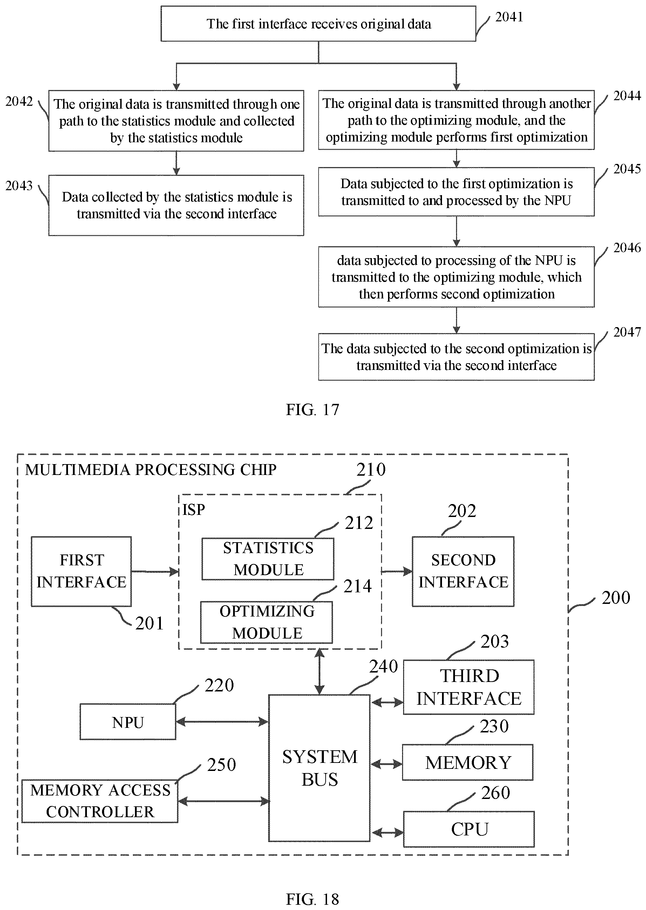

Referring to FIG. 16 and FIG. 17, a method for processing data by the multimedia processing chip 200 includes the following.

At block 2041, the first interface 201 of the multimedia processing chip 200 receives original data, such as dynamic-image data.

At block 2042, the original data is transmitted to the statistics module 212 of the ISP 210, and the statistics module 212 collects status information of the received original data. It should be noted that the original data may also be first stored in the memory 230 and then the statistics module 212 collects status information of the original data stored in the memory 230.

At block 2043, data collected by the statistics module 212 is transmitted for example to an AP chip via the second interface 202. It should be noted that the status information collected by the statistics module 212 may also be first stored in the memory 230 and then transmitted via the second interface 202.

At block 2044, the original data is transmitted through another path to the optimizing module 214, and the optimizing module 214 performs first optimization on the original data, such as BPC, linearization, BLC, etc.

At block 2045, data subjected to the first optimization by the optimizing module 214 is transmitted to and processed by the NPU 220. It should be noted that the data processed by the optimizing module 214 may be first transmitted to the memory 230, and then the data subjected to the first optimization of the optimizing module 214 and stored in the memory 230 may be transmitted to and processed by the NPU 220.

At block 2046, data subjected to processing of the NPU 220 is transmitted to the optimizing module 214, which then performs second optimization on the data subjected to processing of the NPU 220. In this case, a result of the second optimization by the optimizing module 214 can be referred to as a pre-processing result. It should be noted that data subjected to processing of the NPU 220 may be first stored to the memory 230, and then the data stored in the memory 230 and subjected to processing of the NPU 220 is transmitted to the optimizing module 214. The optimizing module 214 then performs the second optimization on the data subjected to processing of the NPU 220. The second optimization may include adjusting a bit width of the data, so that the adjusted bit width can be the same as a bit width required for processing data by the AP chip.

At block 2047, the data subjected to the second optimization of the optimizing module 214 is transmitted via the second interface 203 for example to the AP chip.

The above is the fourth method for processing data by the multimedia processing chip 200 in implementations of the disclosure, which can ensure that the AP chip can further process the data after bit-width adjustment based on the status information, so as to improve the image quality, such as the quality of video playback. In addition, the convergence of the NPU 220 can also be accelerated to improve the smoothness of video playback.

It should also be noted that, for the above-described four method for processing data by the multimedia processing chip 200 in implementations of the disclosure, after the multimedia processing chip 200 receives the image data, the CPU 260 can determine whether a problem such as bad pixel exists in the image data. If the problem exists, the optimizing module 214 may be first invoked first to optimize the image data, for example, to correct the bad pixel. If the problem does not exist, the image data may be directly processed by the NPU 220. After the NPU 220 completes data processing, the CPU 260 can determine whether the bit width of the data subjected to processing of the NPU 220 is the same as a preset bit width. If the bit width of the data subjected to processing of the NPU 220 is the same as the preset bit width, the data subjected to processing of the NPU 220 can be directly transmitted to the AP chip. If the bit width of the data subjected to processing of the NPU 220 is different from the preset bit width, the optimizing module 214 may perform bit-width adjustment, so that the bit width of the data subjected to the bit-width adjustment by the optimizing module 214 is the same as the preset bit width. It can be understood that the preset bit width can be understood as a bit width required by the AP chip to process data.

It should be noted that the connection of the multimedia processing chip 200 and other devices such as the AP chip in implementations of the disclosure is not limited to the above. For example, the multimedia processing chip 200 may further include a third interface connected to the AP chip.

Referring to FIG. 18, the multimedia processing chip 200 may further include a third interface 203. The third interface 203 may be called an interconnect bus interface. For example, the third interface 203 is a peripheral component interconnect express (PCIE) 203, also called a high-speed peripheral component interconnection interface, a peripheral device interconnection bus interface, which is an interface of PCI-Express. It should be noted that the third interface 203 may also be a low-speed interconnection bus interface.

The third interface 203 is connected to the system bus 240. The third interface 203 can realize data transmission with other devices through the system bus 240. For example, the third interface 203 can receive the result of processing the image data by the ISP 210, and the third interface 203 can also receive the result of processing the image data by the NPU 220. The third interface 203 may also be connected to the AP chip, so as to transmit the data processed by the multimedia processing chip 200 to the AP chip.

The third interface 203 can transmit image data offline. For example, the third interface 203 can transmit data of static images offline. The third interface 203 can also transmit data of dynamic images offline. The multimedia processing chip 200 in implementations of the disclosure can not only process image data captured by a camera, but also process static-image data and/or dynamic-image data offline, so as to enhance image quality and video playback quality.

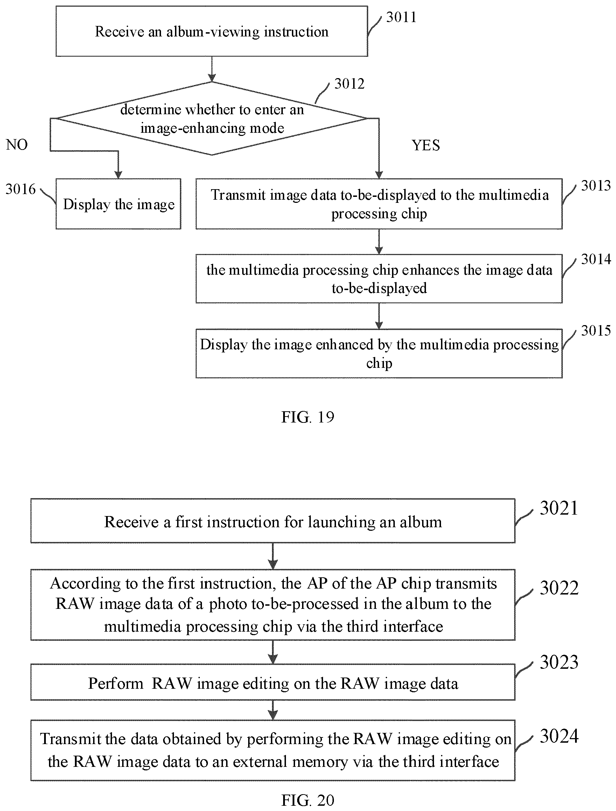

Referring to FIG. 19, a method for processing a static image offline includes the following.

At block 3011, an album-viewing instruction is received. The album-viewing instruction may be received by an AP of an electronic device, such as a smartphone, to which the multimedia processing chip 200 is applied.

At block 3012, determine whether to enter an image-enhancing mode according to the album-viewing instruction. Whether to enter the image-enhancing mode may be determined by the AP of the electronic device, such as the smartphone, to which the multimedia processing chip 200 is applied. For example, after the user enters the album interface, two virtual controls of "enhanced mode" and "normal mode" may be displayed on the album interface. If the user touches the virtual control of "enhanced mode", the AP determines to enter the enhanced mode, and proceeds to operations at block 3013. If the user touches the virtual control of "normal mode", the AP determines not to enter the enhanced mode, and proceeds to 3016. It should be noted that how to determine whether to enter the image-enhancing mode is not limited, and the above is only for illustration.

The image-enhancing mode may be understood as a mode for improving image quality, that is, a mode for processing the image data by the multimedia processing chip 200 in implementations of the disclosure. The normal mode can be understood as a mode in which the image data is not processed by the multimedia processing chip 200 in this disclosure.

At block 3013, image data to-be-displayed is transmitted to the multimedia processing chip 200. The AP of the electronic device such as the smart phone to which the multimedia processing chip 200 is applied may transmit an instruction to transmit the image data to-be-displayed to the multimedia processing chip 200.

At block 3014, the multimedia processing chip 200 enhances the image data to-be-displayed, so as to improve image quality.

At block 3015, the image enhanced by the multimedia processing chip 200 is displayed. The image enhanced by the multimedia processing chip 200 may be displayed on a display screen of the electronic device such as the smart phone to which the multimedia processing chip 200 is applied.

At block 3016, the image is displayed. The image may be directly displayed on the display screen of the electronic device such as the smart phone to which the multimedia processing chip 200 is applied, without enhancement by the multimedia processing chip 200.

For example, when the user starts an album application in the electronic device such as the smart phone, the AP chip may transmit image data of album photos to the multimedia processing chip 200 via the third interface 203. The multimedia processing chip 200 can perform RAW image editing on the image data. After the multimedia processing chip 200 completes processing of the RAW image data, the multimedia processing chip 200 transmits the processed data via the third interface 203 for display on the display screen of the electronic device. Therefore, the multimedia processing chip 200 of some implementations of the disclosure can process the RAW image in the gallery.

It should be noted that, when a user uses the electronic device such as the smart phone to capture an image, the image can be stored as RAW data, to facilitate RAW image editing on the photo in the album, or in other words the data in the gallery, by the multimedia processing chip 200.

Referring to FIG. 20, a method for performing RAW image editing by the multimedia processing chip includes the following.

At block 3021, an AP of an AP chip receives a first instruction for launching an album.

At block 3022, according to the first instruction, the AP of the AP chip transmits RAW image data of a photo to-be-processed in the album to the multimedia processing chip 200 via the third interface 203.

At block 3023, the multimedia processing chip 200 performs RAW image editing on the RAW image data.

At block 3024, the multimedia processing chip 200 transmits the data obtained by performing the RAW image editing on the RAW image data to an external memory via the third interface 203.

It should be noted that, after the multimedia processing chip 200 performs the RAW image editing on the RAW image data, the image data after processing can be transmitted via the third interface 203 to the external memory, such as a memory used by the electronic device to store photos in the album. Then, the photo subjected to processing by the multimedia processing chip 200 on the RAW image data can be displayed on the display screen of the electronic device. It can be understood that the external memory can be understood as a memory outside the multimedia processing chip.

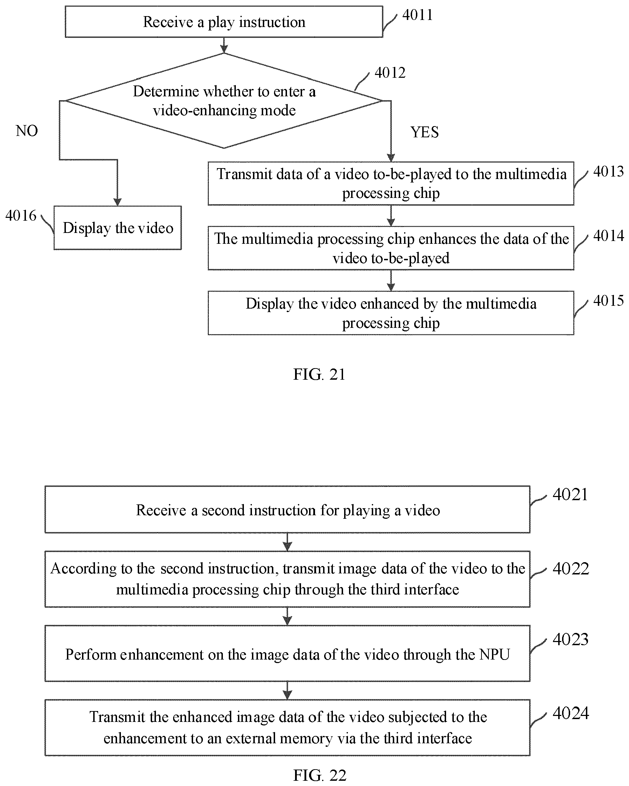

Referring to FIG. 21, a method for processing a dynamic image offline includes the following.

At block 4011, a play instruction is received. The play instruction may be received by an AP of an electronic device such as a smart phone to which the multimedia chip 200 is applied.

At block 4012, determine whether to enter a video-enhancing mode according to the play instruction. Whether to enter the video-enhancing mode may be determined by the AP of the electronic device such as the smartphone to which the multimedia processing chip 200 is applied. For example, after the user enters the video interface, two virtual controls of "enhanced mode" and "normal mode" may be displayed on the video interface. If the user touches the virtual control of "enhanced mode", the AP determines to enter the enhanced mode, and proceeds to operations at block 4013. If the user touches the virtual control of "normal mode", the AP determines not to enter the enhanced mode, and proceeds to operations at block 4016. It should be noted that how to determine whether to enter the video-enhancing mode is not limited to the above, which is only for illustration.

The video-enhancing mode may be understood as a mode for improving video quality, that is, a mode for processing video data by the multimedia processing chip 200 in implementations of the disclosure. The normal mode can be understood as a mode in which the video data is not processed by the multimedia processing chip 200 in this disclosure.

At block 4013, data of a video to-be-played is transmitted to the multimedia processing chip 200 according to the play instruction. The AP of the electronic device such as the smart phone to which the multimedia processing chip 200 is applied may transmit an instruction to transmit the data of the video to-be-played to the multimedia processing chip 200.

At block 4014, the multimedia processing chip 200 enhances the data of the video to-be-played, so as to improve quality of video playback.

At block 4015, the video enhanced by the multimedia processing chip 200 is displayed. The video enhanced by the multimedia processing chip 200 may be displayed on a display screen of the electronic device such as the smart phone to which the multimedia processing chip 200 is applied.

At block 4016, the video is displayed. The video may be directly displayed on the display screen of the electronic device such as the smart phone to which the multimedia processing chip 200 is applied, without enhancement by the multimedia processing chip 200.

For example, when the user uses the electronic device such as the smart phone to play the video, or when the electronic device is in a video-playing mode, the AP chip can transmit the image data of the playing video to the multimedia processing chip 200 via the third interface 203. The multimedia processing chip 200 may process the image data, such as by the NPU 220. In this way, the resolution of the playing video can be improved and the problem of graininess during video playback can be solved. After the multimedia processing chip 200 completes processing of the image data, the multimedia processing chip 200 transmits the processed data via the third interface 203 for playback on the display screen of the electronic device. Therefore, the multimedia processing chip 200 in implementations of the disclosure can realize the processing of video playback.

Referring to FIG. 22, a method for processing image data of video play includes the following.

At block 4021, an AP of an AP chip receives a second instruction for playing a video.

At block 4022, according to the second instruction, the AP of the AP chip transmits image data of the video to the multimedia processing chip 200 through the third interface 203.

At block 4023, the multimedia processing chip 200 performs enhancement, such as super resolution processing, on the image data of the video through the NPU 220, so as to increase a resolution of the video and solve the grainy problem during video playing.

At block 4024, the multimedia processing chip 200 transmits the enhanced image data of the video to an external memory via the third interface 203.

It should be noted that after the multimedia processing chip 200 performs image processing on the image data of the video, the processed data can be transmitted via the third interface 203 to the external memory, such as the memory configured to store videos in the electronic device. Then the video of which the image data was processed by the multimedia processing chip 200 can be displayed on the display screen of the electronic device. It is understood that the external memory can be understood as the memory outside the multimedia processing chip.

The processing on the image data by the multimedia processing chip 200 may include two operations. One is to collect status information of the image data by the ISP 210. The other is to preprocess the image data by all or part of the image processors in the multimedia processing chip 200, such as the ISP 210 and the NPU 220. This preprocessing can be understood as that first the ISP 210 performs the first preprocessing such as optimization on the image data, then the NPU performs the second preprocessing such as processing with the neural network algorithm on the image data subjected to the first preprocessing, and at last the ISP 210 performs the third preprocessing such as bit-width adjustment on the image data subjected to the second preprocessing. It should be noted that the preprocessing on the image data by all or part of the image processors in the multimedia processing chip 200 at least includes that the NPU 220 processes the image data with the neural network algorithm. Before processing by the NPU 220, the ISP 210 can first optimize the image data. After processing by the NPU 220, the ISP 210 can further adjust the bit width of the image data.

It can be understood that the multimedia processing chip 200 in implementations of the disclosure can transmit data via the third interface 203 when processing offline images or videos. In this way, the second interface 202 will not be occupied and can transmit real-time data.

It should be noted that the module for processing image data in the multimedia processing chip 200 of the implementations of the disclosure is not limited to the above. The multimedia processing chip 200 can also include other processing modules to process image data. For example, the multimedia processing chip 200 can also include a digital signal processor (DSP).

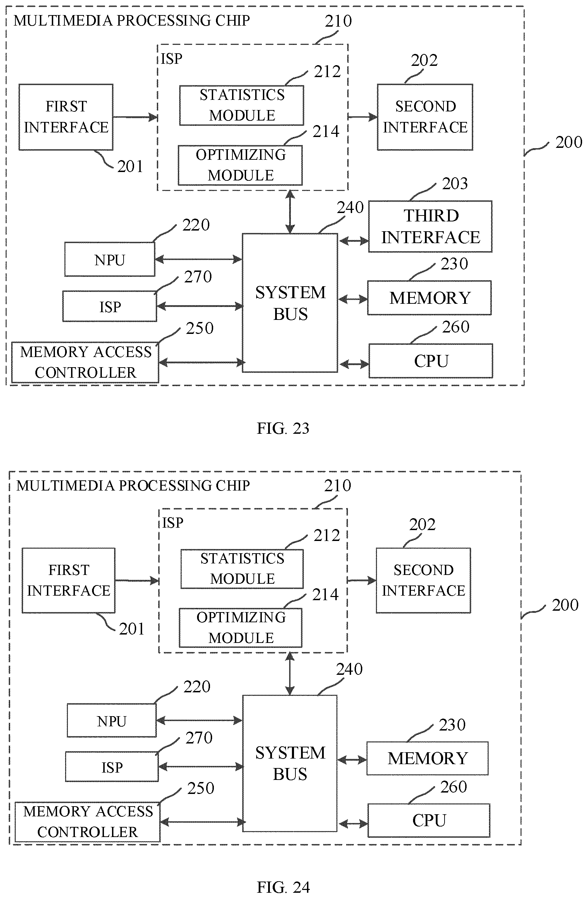

Referring to FIG. 23, the multimedia processing chip 200 can also include a DSP 270, which can be configured to assist the ISP 210 and the NPU 220. However, the DSP 270 may also process image data requiring a small amount of computation.

The DSP 270 process the image data with some general algorithms. For example, the DSP 270 can select one frame from multiple image frames using an image-quality detection algorithm. It should be noted that in some cases, the NPU 220 cannot support some algorithms. For example, for ultra-wide-angle cameras, NPU 220 may not be able to achieve distortion correction if required, and in this case the DSP 270 can be used.

It can be seen that the DSP 270 in implementations of the disclosure is mainly configured to process a small amount of image data, and the NPU 220 is mainly configured to process a large amount of image data. For example, the DSP 270 can be configured to process static images, and NPU 220 can be configured to process dynamic images such as video images. For another example, the DSP 270 is configured to process image data in the photographing mode, and the NPU 220 is configured to process image data in the video-recording mode, video playback mode, and preview image mode. Thus, in implementations of the disclosure, the combination of DSP 270 and NPU 220 are used, which can achieve better and more comprehensive image processing and optimization, so that the quality of image data processed by multimedia processing chip 200 is higher and the display effect is better.

In some implementations, in the photographing mode, the multimedia processing chip 200 can transmit the image data in the photographing mode via the third interface 203. In the video-recording mode, the multimedia processing chip 200 can transmit the image data in the video-recording mode via the second interface 202. In the preview image mode, the multimedia processing chip 200 can transmit the image data in the preview image mode via the second interface 202. In the video-playing mode, the multimedia processing chip 200 can transmit the image data of the video via the third interface 203. In the album-photo-displaying mode, the multimedia processing chip 200 can transmit the image data of the displayed photos via the third interface 203.

The image data can be transmitted via the third interface 203 in real time or offline, as well as data such as configuration parameters. The third interface 203 is highly efficient in data transmission. Therefore, in implementations of the disclosure, different data can be allocated for transmission via the second interface 202 and the third interface 203, so as to improve data transmission efficiency. The CPU 260 can determine which type of image data is received by the multimedia processing chip 200, or the CPU 260 can determine in which mode the image data received by the multimedia processing chip 200 is obtained. When the multimedia processing chip 200 receives the image data, the CPU 260 can determine based on the image data in which mode the image data is obtained. When the CPU 260 determines that the image data received by the multimedia processing chip 200 is the image data in the video-recording mode and the preview image mode, the CPU 260 can control the NPU 220 to process the image data. When the CPU 260 determines that the image data received by the multimedia processing chip 200 is the image data in the photographing mode, the CPU 260 can control the DSP 270 to process the image data.

It should be noted that the image data in the photographing mode can also be transmitted via the second interface 202.

Referring to FIG. 24, the multimedia processing chip 200 illustrated in FIG. 24 is different from the multimedia processing chip 200 illustrated in FIG. 23 in that, the multimedia processing chip 200 illustrated in FIG. 24 is not provided with a third interface. The static-image data processed by the multimedia processing chip 200 can also be transmitted via the second interface 202. For example, the second interface 202 has multiple channels. When the multimedia processing chip 200 processes the dynamic image, the dynamic image can be directly transmitted through one or more channels of the second interface 202. That is, each channel of the second interface 202 is preferentially configured for the dynamic-image data processed by the multimedia processing chip 200. When the multimedia processing chip 200 processes the static image, the CPU 260 can first determine whether the second interface 202 has an idle channel, that is, whether there is a channel that is not transmitting dynamic-image data. If one or more of the multiple channels of the second interface 202 are in the idle state, the static-image data processed by the multimedia processing chip 200 can be transmitted through one or more channels in the idle state.

It should be noted that when none of the channels of the second interface 202 is in the idle state, the static-image data may not be transmitted until at least one channel of the second interface 202 is in the idle state. Of course, in other implementations of the disclosure, the static-image data can be transmitted in other ways without determining whether to transmit the static-image data according to the state of channels of the second interface 202.

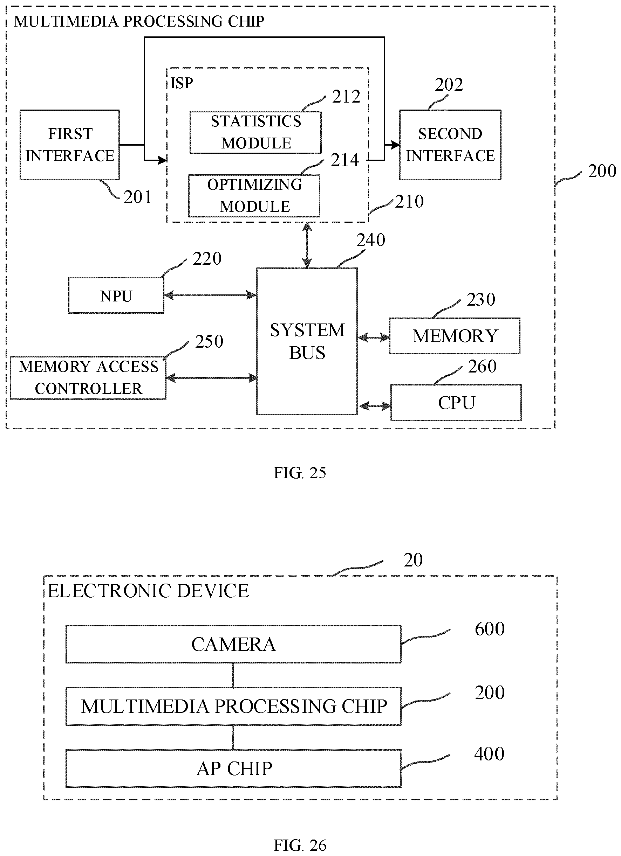

Referring to FIG. 25, the first interface 201 and the second interface 202 of the multimedia processing chip 200 can also be directly connected, so that the first interface 201 can directly transmit some image data, such as static-image data, to the second interface 202 upon reception, without processing the image data by the ISP 210 and/or the NPU 220.

In some implementations, when the multimedia processing chip 200 receives image data of a recorded video, the image data can be transmitted to the ISP 210 via the first interface 201 for processing. When the multimedia processing chip 200 receives data of a preview image, the multimedia processing chip 200 can directly transmit the image data to the second interface 202 via the first interface 201. When the multimedia processing chip 200 receives a photo in the photographing mode, the multimedia processing chip 200 can directly transmit the image data to the second interface 202 via the first interface 201.

In other implementations, when the multimedia processing chip 200 receives the preview image in the preview mode, the multimedia processing chip 200 can also transmit the image data via the first interface 201 to the ISP 210 for processing, thus ensuring image consistency.

In order to further explain data interaction between the multimedia processing chip provided in the implementations of the disclosure and other devices, the following description will be made from the perspective of the application of the multimedia processing chip. It can be understood that the multimedia processing chip 200 can be applied to an electronic device such as a smart phone, a tablet computer, and the like.

Referring to FIG. 26, the electronic device 20 may include an image sensor 600, a multimedia processing chip 200, and an AP chip 400.

The camera 600 can capture image data. The camera 600 may be a front camera or a rear camera. The camera 600 may include an image sensor and a lens, and the image sensor may be a complementary metal-oxide-semiconductor (CMOS) image sensor, a charge coupled device (CCD) image sensor, or the like. The camera 600 may be electrically connected to the multimedia processing chip 200, for example, the camera 600 is electrically connected to the first interface 201 of the multimedia processing chip 200. The camera 600 can capture original image data such as RAW image data, and transmit to the multimedia processing chip 200 via the first interface 201 for processing by an image processor such as the ISP 210 and the NPU 220 in the multimedia processing chip 200.

The multimedia processing chip 200 is any one of the multimedia processing chips 200 described above, and details are not described herein again.

The AP chip 400 can control various functions of the electronic device 20. For example, the AP chip 400 can control the camera 600 of the electronic device 20 to capture images, and the AP chip 400 can also control the multimedia processing chip 200 to process the images captured by the camera 600. The AP chip 400 can also process image data.

The image data captured by the camera 600 can be transmitted to the interface of the multimedia processing chip 200. The multimedia processing chip 200 can perform pre-processing on the image data. The AP chip 400 can perform post-processing on the image data. The processing of image data by the multimedia processing chip 200 and the AP chip 400 may be different or the same.

The application of one of the multimedia processing chips to the electronic device 20 will be described in detail below.

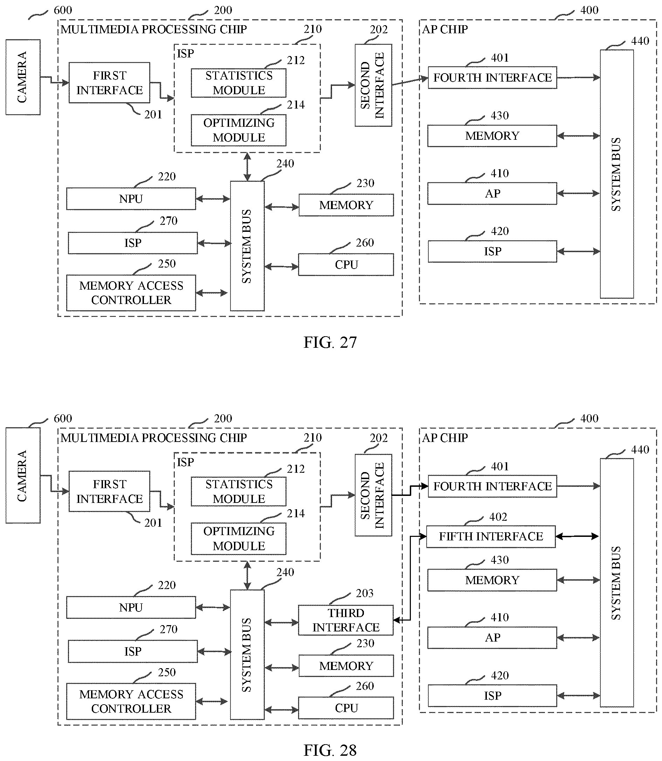

Referring to FIG. 27, the AP chip 400 of the electronic device 20 may include an AP 410, an ISP 420, a memory 430, a system bus 440, and a fourth interface 401.

The AP 410 may serve as a control center of the electronic device 20. The AP 410 may also execute some algorithms to process the image data.

The memory 430 may store various data such as image data, system data, and the like. The memory 430 can be built into the AP chip 410 or externally located in the AP 410.

The fourth interface 401 may be a mobile industry processor interface. The fourth interface 401 is electrically connected to the second interface 202 to receive data processed by the multimedia processing chip 200.

The ISP 420 may process image data.

In some implementations of the disclosure, the AP 410 and the ISP 420 may jointly perform post-processing on the pre-processed image data. It can be understood that, the AP 410 and the ISP 420 may also jointly process the image data captured by the camera 600.

In some implementations, the result of processing the image data by the ISP 210 may be transmitted to the memory 430 of the AP chip 400 through the connection of the second interface 202 and the fourth interface 401. The result of processing the image data by the NPU 220 may be transmitted to the memory 430 of the AP chip 400 through the connection between the second interface 202 and the fourth interface 401. The result of processing the image data by the DSP 270 may be transmitted to the memory 430 of the AP chip 400 through the connection of the second interface 202 and the fourth interface 401.

Referring to FIG. 25, it should be noted that in some cases, the data received by the multimedia processing chip 200, such as the image data in the photographing mode, can be directly transmitted from the first interface 201 to the second interface 202, and then transmitted through the connection of the second interface. 202 and the fourth interface 401 to the memory 430.

It should be noted that, the manner in which the multimedia processing chip 200 transmits data to the AP chip 400 is not limited to the above.

Referring to FIG. 28, the multimedia processing chip 200 in the electronic device 20 may refer to FIG. 23. The AP chip 400 may further include a fifth interface 402. The fifth interface 402 may be called an interconnection bus interface. For example, the fifth interface 402 is a PCIE 402, also called a high-speed peripheral component interconnection interface, a peripheral device interconnection bus interface, which is an interface of PCI-Express. It should be noted that the fifth interface 402 may also be a low-speed interconnection bus interface.

The fifth interface 402 is connected to the third interface 203. In some implementations, the fifth interface 402 and the third interface 203 are of the same type. For example, the fifth interface 402 and the third interface 203 are both high-speed interconnect bus interfaces. The multimedia processing chip 200 may transmit some image data, such as static-image data and preview-image data, to the memory 430 through the connection of the third interface 203 and the fifth interface 402. Of course, the multimedia processing chip 200 may also transmit some data, such as album-photo data and video-playback data, to the memory 430 through the connection between the third interface 203 and the fifth interface 402.

In some implementations, when the multimedia processing chip 200 transmits the processed image data to the AP chip 400, the AP chip 400 performs post-processing on the data processed by the multimedia processing chip 200, and stores the processed data and displays on a display screen.

The following description is made from the perspective of a data processing process.

The multimedia processing chip 200 obtains the dynamic-image data, such as image data of video recording. The multimedia processing chip 200 collects the status information of the dynamic-image data according to the dynamic-image data obtained by the multimedia processing chip 200, and pre-processes the dynamic-image data. When the multimedia processing chip 200 collects the status information and completes preprocessing of the dynamic-image data, the multimedia processing chip 200 can transmit the collected status information and the dynamic-image data subjected to the preprocessing to the AP chip 400. The AP chip 400 performs post-processing on the pre-processed dynamic-image data based on the status information. In this way, the image quality can be improved.

The AP 410 receives a third instruction for opening the camera 600.

The AP 410 opens the camera 600 according to the third instruction for opening the camera 600. The AP 410 may configure the camera 600 to open the camera 600.

The camera 600 captures image data and transmits the image data to the first interface 201 of the multimedia processing chip 200.

The statistic module 212 of the ISP 210 collects the status information of the image data and transmits the collected status information to the fourth interface 401 via the second interface 202.

The optimizing module 214 of the ISP 210 performs optimization on the image data, such as linearization, BPC, BLC, etc., and transmits the optimized data to the NPU 220. It can be understood that the optimizing module 214 can directly transmit the optimized data to the NPU 210 or store the optimized data in the memory 230, which is then obtained from the memory 230 by the NPU 220.

The NPU 210 processes the optimized data from the optimizing module 214, such as with a neural network algorithm, and transmits the processed data to the memory 230.

The multimedia processing chip 200 transmits the processed data to the fourth interface 401 via the second interface 202.

The AP 410 and the ISP 420 perform post-processing, such as 3A processing, on the data processed by the NPU 220 based on the status information.

It can be understood that if the image data is processed by the AP chip alone, the ISP of the AP chip needs to collect the status information of the image data, and the AP of the AP chip needs to execute some algorithms to calculate some parameters based on the status information, such as focusing parameters, exposure parameters, white balance parameters, LSC parameters, etc. Based on the calculated parameters, the AP can configure the camera, and the image data can be corrected by the ISP. The whole processing process is executed by the AP chip, resulting in high power consumption of the AP chip. The AP chip generally needs to control other functions, which may affect the performance of the AP chip during the entire image processing process.

In the implementations of the disclosure, processing of the image data is partially allocated to the multimedia processing chip 400, and partially allocated to the AP chip 200. Thus, the image quality can be improved while power consumption of the AP chip 200 can be saved. After the ISP 210 collects the status information, the ISP 210 can transmit the collected status information to the AP chip 400. The AP 410 executes some algorithms to calculate some parameters based on the status information, such as focusing parameters, exposure parameters, white balance parameters, LSC parameters, etc. Based on the calculated parameters, the AP 410 can configure the camera 600 and the image data can be corrected by the ISP 420. It should be noted that after the ISP 210 collects the status information, the ISP 210 can also calculate without the AP 410 executing some algorithms. For example, the CPU 260 executes some algorithms to calculate some parameters based on the status information, and then transmits the parameters to the AP chip 400. The AP 410 can configure the camera 600, and the image data is corrected by the ISP 420. In addition, after the ISP 210 collects the status information, the ISP 420 can also execute some algorithms to calculate some parameters based on the status information. The AP 410 configures the camera 600 based on the parameters, and the ISP 420 corrects the image data. It can be understood that the algorithms executed by the AP 410 and the CPU 260 can be updated, while the algorithms executed by the ISP 420 often cannot be updated. In practice, the AP 410 or the main control processor 260 can be preferentially selected to execute the relevant algorithm to calculate the status information.

In the following, different status information is illustrated by way of example.

The status information may include AF status information. The AP 410 can execute a relevant algorithm to calculate focusing parameters based on the AF state information, and configure the focusing parameters to the camera 600. The camera 600 can perform focusing based on the focusing parameters. The main control processor 260 can also execute a relevant algorithm to calculate the focusing parameters based on the AF status information, and then configure the focusing parameters to the camera 600, or transmit to the AP chip 400, and the AP 410 configures the focusing parameters to the camera 600. Of course, the ISP 420 may perform a relevant algorithm to calculate the focusing parameters. The auto focus state information can include one or more of phase detection auto focus (PDAF) status information, contrast detection auto focus (CDAF) status information, laser focus state information and time of flight (ToF) focus state information.

The AF status information may include CDAF status information. The ISP 210 may process the image data such as the dynamic-image data with a preset algorithm to calculate the CDAF status information. The AP 410 may execute a relevant algorithm to calculate the CDAF parameters based on the CDAF status information, and configure the CDAF parameters to the camera 600. The camera 600 may perform focusing based on the CDAF parameters. Optionally, the CPU 260 may execute a relevant algorithm to calculate the CDAF parameters based on the CDAF status information, and configure the CDAF parameters to the camera 600, or transmit the CDAF parameters to the AP chip 410. Then the AP 410 configures the CDAF parameters to the camera 600. Optionally, the ISP 420 may execute a relevant algorithm to calculate the CDAF parameters.

The AF status information may include PDAF status information. The image sensor 210 may sample the image data such as the dynamic-image data, for example, mark and differentiate the image data, to calculate the PDAF status information. The AP 410 may execute a relevant algorithm to calculate the PDAF parameters based on the PDAF status information, and configure the PDAF parameters to the camera 600. The camera 600 may perform focusing based on the PDAF parameters. Optionally, the CPU 260 may execute a relevant algorithm to calculate the PDAF parameters based on the PDAF status information, and configure the PDAF parameters to the camera 600, or transmit the PDAF parameters to the AP chip 410. Then the AP 410 configures the PDAF parameters to the camera 600. Optionally, the ISP 420 may execute a relevant algorithm to calculate the PDAF parameters.

The AF status information may include laser focus status information. The ISP 210 may process the image data such as the dynamic-image data with a preset algorithm to calculate the laser focus status information. The AP 410 may execute a relevant algorithm to calculate the laser focus parameters based on the laser focus status information, and configure the laser focus parameters to the camera 600. The camera 600 may perform focusing based on the laser focus parameters. Optionally, the CPU 260 may execute a relevant algorithm to calculate the laser focus parameters based on the laser focus status information, and configure the laser focus parameters to the camera 600, or transmit the laser focus parameters to the AP chip 410. Then the AP 410 configures the laser focus parameters to the camera 600. Optionally, the ISP 420 may execute a relevant algorithm to calculate the laser focus parameters.

The AF status information may include ToF focus status information. The ISP 210 may process the image data such as the dynamic-image data with a preset algorithm to calculate the ToF focus status information. The AP 410 may execute a relevant algorithm to calculate the ToF focus parameters based on the ToF focus status information, and configure the ToF focus parameters to the camera 600. The camera 600 may perform focusing based on the ToF focus parameters. Optionally, the CPU 260 may execute a relevant algorithm to calculate the ToF focus parameters based on the ToF focus status information, and configure the ToF focus parameters to the camera 600, or transmit the ToF focus parameters to the AP chip 410. Then the AP 410 configures the ToF focus parameters to the camera 600. Optionally, the ISP 420 may execute a relevant algorithm to calculate the ToF focus parameters.

The status information may include AWB status information. The AP 410 can execute a relevant algorithm to calculate white balance parameters based on the AWB status information. The ISP 420 may perform, based on the white balance parameters, white balance processing (or called image correction) on the image data pre-processed by the multimedia processing chip 200. Optionally, the CPU may execute a relevant algorithm to calculate white balance parameters based on the AWB status information and then transmit the white balance parameters to the AP chip 400. The ISP 420 then performs, based on the white balance parameters, white balance processing on the image data pre-processed by the multimedia processing chip 200. Optionally, the ISP 420 may execute a relevant algorithm to calculate the white balance parameters.

The status information may include AE status information. The AP 410 can execute a relevant algorithm to calculate exposure parameters based on the AE status information, and configure the exposure parameters to the camera 600. The camera 600 can expose based on the exposure parameters. Optionally, the CPU 260 may execute a relevant algorithm to calculate the exposure parameters based on the AE status information, and configure the exposure parameters to the camera 600, or transmit the exposure parameters to the AP chip 400. Then the AP 410 configures the exposure parameters to the camera 600. Optionally, the ISP 420 may execute a relevant algorithm to calculate the exposure parameters. It should be noted that if the exposure parameters need to be compensated, the ISP 420 may compensate the exposure parameters and then the AP 410 configure the compensated exposure parameters to the camera 600. The camera may expose based on the compensated exposure parameters.

The status information may include LSC status information. The AP 410 can execute a relevant algorithm to calculate LSC parameters based on the LSC status information. The ISP 420 may perform, based on the LSC parameters, LSC on the image data pre-processed by the multimedia processing chip 200. Optionally, the CPU 260 may execute a relevant algorithm to calculate the LSC parameters based on the LSC status information, and configure the LSC parameters to the camera 600, or transmit the LSC parameters to the AP chip 400. Then the ISP 420 performs, based on the white balance parameters, white balance processing on the image data pre-processed by the multimedia processing chip 200. Optionally, the ISP 420 may execute a relevant algorithm to calculate the LSC parameters.

The ISP 420 may collect the status information of the image data as follows. The status information was calculated with an algorithm, and/or the status information is extracted by way of sampling.

The processing performed on the image data by the optimizing module 214 will not performed again by the ISP 420. For example, if the optimizing module 214 has performed BPC, linearization, and BLC on the image data, the ISP 420 do not need to perform BPC, linearization, and BLC. In implementations of the disclosure, processing of the multimedia processing chip 200 and processing of the AP 400 are differentiated, which can save power consumption of the AP chip 400. For example, if the optimizing module 214 has performed BPC, linearization, and BLC on the image data, the ISP 420 do not need to perform BPC, linearization, and BLC. However, the AP chip 400 and the multimedia processing chip 200 may also perform some same processing. For example, the multimedia processing chip 200 performs noise reduction on the dynamic-image data, and the AP chip 400 also performs noise reduction on the dynamic-image data. For another example, the multimedia processing chip 200 collects the dynamic-image data, and the AP chip 400 also collects the dynamic-image data.

The ISP 420 transmits the processed data to the display screen and the memory 430 for display and storage.

It should be noted that if the image is a dynamic image, the image can be encoded by an encoder before storage, and stored after the encoding is completed. If the image is a static image, the image can be compressed in the memory, such as JPEG compression, and stored after compression.

It should also be noted that the image data processed by the multimedia processing chip 200 can be RAW image data, and the AP chip 400 can process RAW image data, such as 3A processing, or convert RAW format to YUV format to process images in YUV format. For example, the ISP 420 performs RGB To YUV processing on an image in YUV format.

Before the ISP 210 transmits the data processed by the neural network processor 220 to the fourth interface 401 via the second interface 202, the main control processor 260 can first determine whether the bit width of the data processed by the neural network processor 220 is the same as that of the data to-be-processed by the AP chip 400. If the bit width of the data processed by the neural network processor 220 is the same as that of the data to-be-processed by the AP chip 400, the ISP 210 transmits the data processed by the neural network processor 220 to the fourth interface 401 via the second interface 202. If the bit width of the data processed by the neural network processor 220 is not the same as that of the data to-be-processed by the AP chip 400, the optimization module 214 of the ISP 210 adjusts the bit width of the data processed by the neural network processor 220, so that the bit width of the adjusted data can be the same as that of the data to-be-processed by the AP chip 400. In this way, it can be ensured that the AP chip 400 can normally process the data transmitted from the multimedia processing chip 200.

It should also be noted that in some implementations, when the multimedia processing chip 200 processes the image data, the original image may not be optimized by the optimizing module 214, but processed by the NPU 220 directly instead.

The method for processing image data by the multimedia processing chip 200 in implementations of the disclosure may refer to FIG. 7 to FIG. 17, which will not be repeated herein.

The following description is made from the perspective of the process of processing image data by the AP chip 400.

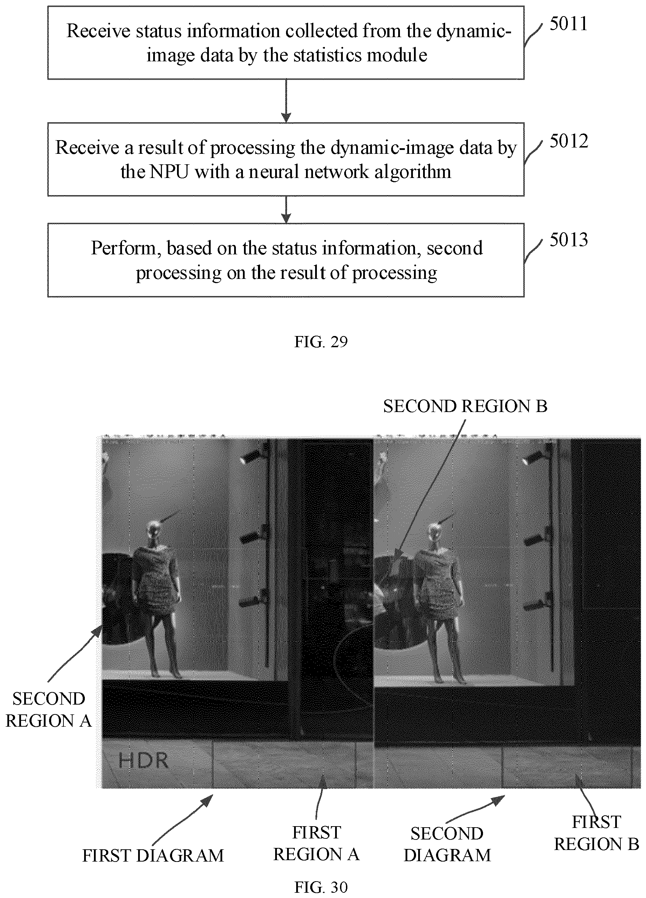

Referring to FIG. 29, a method for processing image data by the AP chip 400 includes the following.

At block 5011, the AP chip 400 receives status information collected from the dynamic-image data by the statistics module 212 via the fourth interface 401.

At block 5012, the AP chip 400 receives a result of processing the dynamic-image data by the NPU 220 with a neural network algorithm via the fourth interface 401.

It should be noted that before the neural network processor 220 processes the dynamic image data with the neural network algorithm, the optimization module 214 can perform optimization on the dynamic-image data.

At block 5013, the AP chip performs, based on the status information, second processing on the result of processing the dynamic-image data by the NPU 220.

It should be noted that before the AP chip 400 performs processing, the optimization module 214 can adjust the bit width of the data processed by the neural network processor 220.

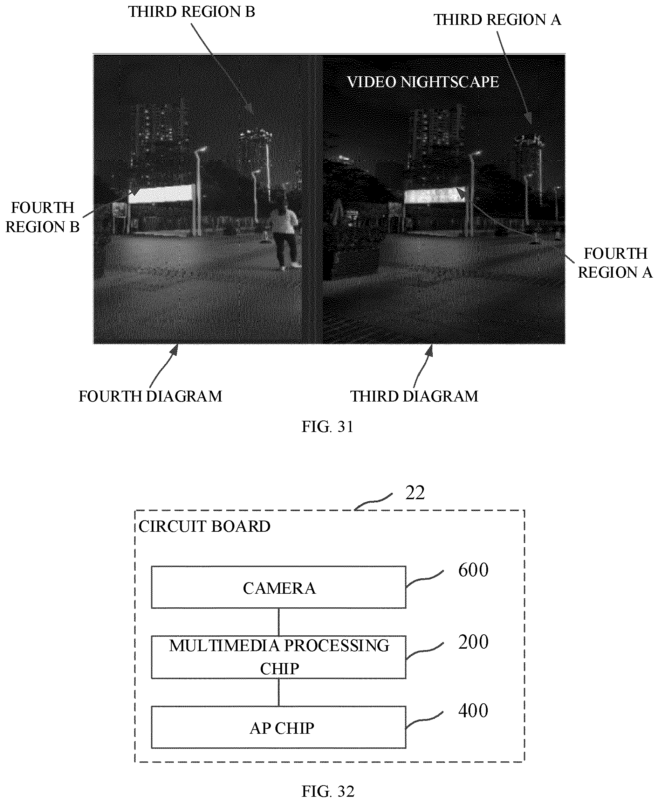

In implementations of the disclosure, the multimedia processing chip 200 first performs pre-processing on the image data, and then the AP chip performs post-processing on the image data, so as to improve image quality. Referring to FIG. 30 and FIG. 31, the first diagram of FIG. 30 illustrates an image frame displayed after processing by both the multimedia processing chip 200 and the AP chip 400. The processing includes processing with an HDR algorithm on the image data by the NPU 220 in implementations of the disclosure. The second diagram of FIG. 30 illustrates an image frame displayed after processing by only AP chip.

It can be seen from the comparison between the first diagram and the second diagram that, there are differences in many aspects and regions between the two images. For example, the brightness around the character in the second diagram is too bright, and the objects close to the character are too clear. For example, the definition of objects in the second region B is greater than that in the second region A, which leads to the characters being not spotlighted enough. The detail display around the second diagram, such as the first region B, is not as good as that of the first region A.

The third diagram of FIG. 31 illustrates an image frame displayed after processing by both the multimedia processing chip 200 and the AP chip 400, where the processing includes processing the image signal with a video nightscape algorithm by the NPU 220 in implementations of the disclosure. The fourth diagram of FIG. 31 illustrates an image frame displayed after processing only by the AP chip. It can be seen from the comparison between the first diagram and the second diagram that, there are differences in many regions between the two images. For example, the third region A in the third diagram is clearer than the third region B in the fourth diagram. For another example, the fourth region A in the third diagram shows more details than the fourth region B in the fourth diagram.

It can be understood that the camera 600, the multimedia processing chip 200, and the AP chip 400 in the implementations of the disclosure can be installed together, such as the camera 600, the multimedia processing chip 200 and the AP chip 400 can be installed on a circuit board.

Referring to FIG. 32, an image sensor 600, a multimedia processing chip 200 and an AP chip 400 are installed on a circuit board 22. The camera 600, the multimedia processing chip 200 and the AP chip 400 are all connected through signal lines to realize signal transmission.

It can be understood that the circuit board 22 can also be provided with other components, which will not be detailed herein.

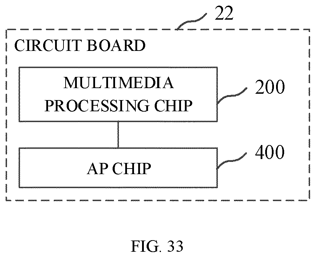

Referring to FIG. 33, a camera 600 may not be installed on a same circuit board as the multimedia processing chip 200 and AP chip 400. For example, the camera 600 is installed on a circuit board separately, and the multimedia processing chip 200 and the AP chip 400 are installed on the circuit board 22. The camera 600 is connected with multimedia processing chip 200 through a signal line.

The multimedia processing chip, the electronic device, and the method for processing dynamic images provided in the implementations of the disclosure are described in detail above. In this disclosure, specific examples are used to explain the principle and implementation of the disclosure. The above examples are only used to help understand the application. For those skilled in the art, according to the idea of this disclosure, there will be changes in the specific implementation and application. In conclusion, the content of this specification should not be interpreted as a restriction on this disclosure.

## Claims

1. A multimedia processing chip, comprising:
an image signal processor (ISP) configured to collect status information of image data; and
a neural-network processing unit (NPU) configured to process the image data with a neural-network algorithm,
the multimedia processing chip being configured to perform pre-processing on the image data at least by the NPU, and transmit the status information and the image data subjected to the pre-processing to an application processing (AP) chip.

2. The multimedia processing chip of claim 1, wherein
the ISP is further configured to perform first pre-processing on the image data; and
the NPU is further configured to perform second pre-processing on the image data subjected to the first pre-processing.

3. The multimedia processing chip of claim 2, wherein the ISP is further configured to perform third pre-processing on the image data subjected to the second pre-processing, wherein the ISP configured to perform the third pre-processing on the image data subjected to the second pre-processing is configured to:
perform bit-width adjustment on the image data subjected to the second pre-processing, such that a bit width of the image data subjected to the bit-width adjustment is the same as a bit width for processing image data by the AP chip.

4. The multimedia processing chip of claim 2, wherein the first pre-processing performed on the image data by the ISP comprises at least one of bad pixel correction (BPC), linearization, or black level correction (BLC).

5. The multimedia processing chip of claim 4, wherein the first pre-processing performed on the image data by the ISP further comprises image cropping and/or image down-scaling.

6. The multimedia processing chip of claim 1, wherein the ISP is further configured to perform bit-width adjustment on the image data subjected to the neural-network algorithm, such that a bit width of the image data subjected to the bit-width adjustment is the same as a bit width for processing image data by the AP chip.

7. The multimedia processing chip of any of claims 1-6, wherein the image data comprises dynamic-image data and the multimedia processing chip is configured to process the dynamic-image data, wherein the neural-network algorithm used by the NPU to process the dynamic-image data comprises at least one of:
a nightscape algorithm, a high-dynamic range (HDR) algorithm, a blur algorithm, a denoising algorithm, a super-resolution algorithm, or a semantic segmentation algorithm.

8. The multimedia processing chip of claim 7, wherein the multimedia processing chip is configured to process the dynamic-image data in real time, and transmit the dynamic-image data processed to the AP chip in real time.

9. The multimedia processing chip of any of claims 1-6, wherein the image data comprises static-image data and the multimedia processing chip is configured to process the static-image data, wherein the neural-network algorithm used by the NPU to process the static-image data comprises at least one of:
a nightscape algorithm, an HDR algorithm, a blur algorithm, a denoising algorithm, a super-resolution algorithm, or a semantic segmentation algorithm.

10. The multimedia processing chip of any of claims 1-6, wherein the multimedia processing chip is further configured to process static-image data or dynamic-image data offline.

11. The multimedia processing chip of any of claims 1-6, wherein the image data is raw image data and the multimedia processing chip is configured to process the raw image data.

12. The multimedia processing chip of any of claims 1-6, wherein the status information comprises at least one of automatic exposure (AE) status information, automatic white balance (AWB) status information, or automatic focus (AF) status information.

13. The multimedia processing chip of claim 12, wherein the status information further comprises lens shade correction (LSC) status information.

14. An electronic device, comprising:
the multimedia processing chip of any of claims 1-13; and
the AP chip configured to obtain, from the multimedia processing chip, a result of the pre-processing and the status information collected, and perform post-processing on the result of the pre-processing based on the status information.

15. The electronic device of claim 14, wherein the status information comprises at least one of automatic focus (AF) status information, automatic white balance (AWB) status information, or automatic exposure (AE) status information, and the AP chip is configured to:
calculate a focus parameter based on the AF status information and configure the focus parameter to a camera of the electronic device;
calculate a white-balance parameter based on the AWB status information and perform white balance on the result of the pre-processing based on the white-balance parameter; and
calculate an exposure parameter based on the AE status information, and configure the exposure parameter to the camera of the electronic device, or configure the exposure parameter after compensation to the camera of the electronic device.

16. The electronic device of claim 15, wherein the AF status information comprises phase detection auto focus (PDAF) status information and contrast detection auto focus (CDAF) status information, and
the ISP of the multimedia processing chip is configured to:
obtain the CDAF status information by processing the image data with a preset algorithm; and
extract the PDAF status information from the image data, and
the AP chip is further configured to:
calculate a CDAF parameter based on the CDAF status information, and configure the CDAF parameter to the camera of the electronic device; and
calculate a PDAF parameter based on the PDAF status information, and configure the PDAF parameter to the camera of the electronic device.

17. The electronic device of claim 15, wherein the status information further comprises lens shade correction (LSC) status information, and the AP chip is further configured to:
calculate an LSC parameter based on the LSC status information, and perform lens shading correction on the result of the pre-processing based on the LSC parameter.

18. A method for dynamic-image processing, comprising:
obtaining dynamic-image data;
collecting, by a multimedia processing chip, status information of the dynamic-image data and performing pre-processing on the dynamic-image data according to the dynamic-image data;
transmitting, to an AP chip, the status information collected and the image data subjected to the pre-processing by the multimedia processing chip; and
performing according to the status information, by the AP chip, post-processing on the dynamic-image data subjected to the pre-processing.

19. The method of claim 18, wherein performing the pre-processing on the dynamic-image data by the multimedia processing chip comprises:
optimizing the dynamic-image data; and
processing, with a neural-network algorithm, the dynamic-image data subjected to the optimizing.

20. The method of claim 18 or 19, wherein the status information comprises at least one of automatic focus (AF) status information, automatic white balance (AWB) status information, or automatic exposure (AE) status information, and performing according to the status information, by the AP chip, the post-processing on the dynamic-image data subjected to the pre-processing comprises:
calculating a focus parameter based on the AF status information and configuring the focus parameter to a camera;
calculating a white-balance parameter based on the AWB status information and performing white balance on a result of the pre-processing based on the white-balance parameter; and
calculating an exposure parameter based on the AE status information, and configuring the exposure parameter to the camera of the electronic device, or configuring the exposure parameter after compensation to the camera.
